(19)

Europäisches
Patentamt

European
Patent Office

Office européen
des brevets

(11) **EP 4 726 597 A1**

(12) **EUROPEAN PATENT APPLICATION**

(43) Date of publication:
**15.04.2026 Bulletin 2026/16**

(21) Application number: **25207461.2**

(22) Date of filing: **08.10.2025**

(51) International Patent Classification (IPC):
***G06F 30/23*** *(2020.01)*      ***G06F 30/17*** *(2020.01)*
***G06F 30/15*** *(2020.01)*

(52) Cooperative Patent Classification (CPC):
**G06F 30/23; G06F 30/17;** G06F 30/15;
G06F 2111/06; G06F 2111/08; G06F 2119/14

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **08.10.2024 US 202463704684 P**

(71) Applicant: **DASSAULT SYSTEMES AMERICAS
CORP.**
**Waltham, MA 02451 (US)**

(72) Inventors:
• **PEDERSEN, Claus Bech Wittendorf**
**22559 Hamburg (DE)**
• **KARNATH, Justus**
**20257 Hamburg (DE)**

(74) Representative: **Bandpay & Greuter**
**11, rue Christophe Colomb**
**75008 Paris (FR)**

(54) **METHODS AND SYSTEMS FOR SIMULATING OBJECTS AND MEASURING UNCERTAINTY IN
SIMULATION RESULTS**

(57)    Embodiments receive a mesh based model, including nodes, representing a real-world object and perform a simulation of the real-world object using the mesh based model, resulting in (i) behaviors of the real-world object and (ii) sensitivity of a value of one or more properties at each node, with respect to a geometrical coordinate of the node. For each node, embodiments determine a geometrical uncorrelated uncertainty based on the sensitivity of the value of the one or more properties at the node and a deviation in the geometrical coordinate of the node. Embodiments determine uncertainty in the behaviors of the real-world object using a summed aggregation function of the geometrical uncorrelated uncertainty determined for each node and an uncertainty characterization parameter, and output (i) an indication of the behaviors of the real-world object and (ii) an indication of the determined uncertainty in the one or more behaviors of the real-world object.

**EP 4 726 597 A1**

**Description**

BACKGROUND

A number of existing product and simulation systems are offered on the market for the design and simulation of objects, *e.g.,* vehicles. Such systems typically employ computer aided design (CAD) and computer aided engineering (CAE) programs. These systems allow a user to construct, manipulate, and simulate complex three-dimensional models of objects or assemblies of objects. These CAD and CAE systems provide a representation of objects, *e.g.,* real-world objects, using edges, lines, faces, polygons, or closed volumes. Lines, edges, faces, polygons, and closed volumes may be represented in various manners, *e.g.,* non-uniform rational basis-splines (NURBS).

Such systems manage parts or assemblies of parts of modeled objects, which are mainly specifications of geometry. In particular, CAD files contain specifications, from which geometry is generated. From geometry, a representation, e.g., a three-dimensional (3D) CAD mode is generated.

The advent of CAD and CAE systems allows for a wide range of representation possibilities for objects. Example computer-based models used by CAD and CAE systems include CAD models and finite element (FE) models (*i.e.,* meshes). A computer-based model may be programmed in such a way that the model has the properties (*e.g.,* physical, material, or other physics-based) of the underlying real-world object or objects that the model represents. Example properties include stiffness (ratio of force to displacement), plasticity (irreversible strain), and viscosity (resistance to flow of one layer over an adjacent layer), among other examples. When a CAD or other such computer-based model as is known in the art, is programmed in such a way, it may be used to perform simulations of the object that the model represents. For example, a mesh based model may be used to represent the interior cavity of a vehicle, the acoustic fluid surrounding a structure, or any number of real-world objects. Moreover, CAD and CAE systems, along with computer-based models, can be utilized to simulate engineering systems, such as real-world physical systems, e.g., cars, airplanes, buildings, and bridges, among other examples. Further, CAE systems can be employed to simulate any variety and combination of behaviors of these physics-based systems, such as noise and vibration.

SUMMARY

Existing CAD and CAE methods can be employed to perform computer-based simulation. However, existing methods suffer from numerical issues present in, e.g., CAE, meshing on software platforms being an epistemic uncertainty. Embodiments solve this problem.

The problem of meshing uncertainty solved by embodiments disclosed herein may present itself when a same CAD model is meshed several times using the same preprocessing meshing settings for the numerical modeling. These several meshing implementations often generate results where the number of nodes for the mesh and/or the locations of meshed nodes may be slightly different due to numerical uncertainties in the meshing algorithms or due to different software compilers. A subsequent issue occurs when these slightly different meshed models are distinctly applied in a deterministic optimization setup. Specifically, the differences in the modeling of the primal solutions (e.g., due to the different meshes) numerically accumulate over the optimization iterations, thereby yielding rather different optimized designs. This may be problematic for users because users expect the same optimized design for each optimization run as the slightly different meshed models should solve the same system. Hence, users may sometimes see rather different optimized designs due to the small nodal geometrical differences (i.e., geometrical uncertainties) in the numerical modeling for essentially the same optimization. Embodiments solve this problem by providing a novel uncertainty approach applied as a design response for sensitivity-based optimization using an uncertainty measure for uncorrelated geometrical nodal distributions.

One such embodiment is directed toward a computer-implemented method. In such an embodiment, a processor performs the method by receiving, in memory of the processor, a mesh based model representing a real-world object, where the mesh based model includes a plurality of nodes. The method continues by performing a simulation of the real-world object using the mesh based model received, wherein results of performing the simulation include (i) one or more behaviors of the real-world object and (ii) sensitivity of a value of one or more properties at each node, of a subset of the plurality of nodes, with respect to a geometrical coordinate of the node. Further, for each node of the subset of the plurality of nodes, geometrical uncorrelated uncertainty for the node is determined based on the sensitivity of the value of the one or more properties at the node and a deviation in the geometrical coordinate of the node. To continue, the embodiment determines uncertainty in the one or more behaviors of the real-world object, wherein the uncertainty in the one or more behaviors of the real-world object is determined using a summed aggregation function of the geometrical uncorrelated uncertainty determined for each node of the subset and an uncertainty characterization parameter. In turn, the embodiment outputs (i) an indication of the one or more behaviors of the real-world object and (ii) an indication of the determined uncertainty in the one or more behaviors of the real-world object.

An embodiment further includes receiving an indication of a value of the uncertainty characterization parameter.

In an embodiment, responsive to the uncertainty characterization parameter being above a threshold, the indication of the determined uncertainty includes an indication of contribution by one or more nodes, of the subset of the plurality of nodes, to the determined uncertainty. In such an embodiment, the indication of contribution includes an indication of at least one of: magnitude and location.

According to an embodiment, responsive to the uncertainty characterization parameter being below a threshold, the indication of the determined uncertainty is free from an indication of contribution to the determined uncertainty.

In another embodiment, determining the uncertainty in the one or more behaviors of the real-world object includes determining a regularized geometrical uncorrelated uncertainty for two or more nodes of the subset of the plurality of nodes as a function of a weighted average of the geometrical uncorrelated uncertainty determined for each of the two or more nodes, and determining the uncertainty in the one or more behaviors of the real-world object using (i) the summed aggregation function of the geometrical uncorrelated uncertainty determined for each node of the subset, (ii) the uncertainty characterization parameter, and (iii) the regularized geometrical uncorrelated uncertainty determined.

According to an embodiment, the one or more behaviors of the real-world object include at least one of: a stress, a strain, a force, a displacement, a velocity, an acceleration, an eigenfrequency, a temperature, and a flux.

An embodiment further includes defining a design response of the real-world object as an objective function. In such an embodiment, the design response is based on the determined uncertainty in the one or more behaviors of the real-world object and the one or more behaviors of the real-world object. Such an embodiment may further include defining an optimization problem as a function of the design response defined and at least one constraint. Additionally, such an embodiment may include iteratively modifying at least one design variable in the mesh based model representing the real-world object and executing the performing the simulation, the determining geometrical uncorrelated uncertainty, and the determining uncertainty in the one or more behaviors of the real-world object using the mesh based model with the modified at least one design variable, until the optimization problem is satisfied.

In an embodiment, for a given node of the subset of the plurality of nodes, the sensitivity of a value of one or more properties at the given node with respect to a geometrical coordinate of the given node is a magnitude of a vector.

According to an embodiment, the determined uncertainty is at least one of an aleatoric uncertainty and an epistemic uncertainty.

Another example embodiment is directed toward a computer-based system. According to an embodiment, the system includes a processor and a memory with computer code instructions stored thereon. In such an embodiment, the processor and the memory, with the computer code instructions, are configured to cause the system to implement any embodiments or combination of embodiments described herein.

Yet another embodiment is directed to a computer program product. The computer program product comprises a non-transitory computer readable medium that includes program instructions which, when executed by a processor, causes the processor to implement any embodiments or combination of embodiments described herein.

It is noted that embodiments of the method, system, and computer program product may be configured to implement any embodiments, or combination of embodiments, described herein.

BRIEF DESCRIPTION OF THE DRAWINGS

The foregoing will be apparent from the following more particular description of example embodiments, as illustrated in the accompanying drawings in which like reference characters refer to the same parts throughout the different views. The drawings are not necessarily to scale, emphasis instead being placed upon illustrating embodiments.

FIG. 1A shows an example computer-based model of a L-shaped bracket.

FIG. 1B shows optimized designs for a compliance topology optimization of the L-shaped model of FIG. 1A resulting from using two meshes.

FIG. 2 shows a workflow diagram of a computer-implemented method according to an embodiment.

FIG. 3 illustrates nodewise local uncorrelated geometrical distribution at discrete coordinates of nodes of a mesh.

FIGs. 4A illustrates variations of displacement magnitude as a response of in-plane geometrical perturbations in x-direction and y-direction of a node.

FIG. 4B illustrates variations for geometrical perturbations of a four-node plane stress element.

FIG. 5 shows a coarse mesh and a fine mesh and standard deviations for the coarse mesh and fine mesh for different values of an uncertainty characterization parameter $p$, according to an embodiment.

FIG. 6A illustrates a design space and material layout of an inverter mechanism topology optimization model which may demonstrate implementations of embodiments disclosed herein.

FIGs. 6B-6D illustrate geometrical perturbation fields and corresponding sensitivities for varying geometrical uncertainty measures with respect to an elemental topology model from FIG. 6A.

FIG. 7 is a flowchart of a method for deterministic optimization extended for robustness with respect to nodal geometrical uncertainty, according to an embodiment.

FIG. 8A shows a design space and a non-design spaces for a computer-based mode of an example L-shaped bracket which may demonstrate embodiments disclosed herein.

FIG. 8B shows a pressure loading region and clamped boundary conditions of the L-shaped bracket model from FIG. 8A.

FIG. 8C shows two distinct mesh models for the L-shaped bracket model from FIG. 8A.

FIG. 8D shows an overlay of the two mesh models from FIG. 8C, highlighting differences between the two mesh models.

FIGs. 9A - 9F illustrate topology optimization results using a sensitivity filter for the two mesh models defined in FIGs. 8A - 8C.

FIGs. 10A - 10D illustrate topology optimization results using a design variable filter for the two mesh models defined in FIGs. 8A - 8C.

FIGs. 11A - 11D illustrate topology optimization results using a design variable filter for the two mesh models defined in FIGs. 8A - 8C.

FIGs. 12A - 12D illustrate thickness sizing optimization results using a sensitivity filter for the two mesh models defined in FIGs. 8A - 8C.

FIG. 13A shows a design space and non-design spaces for a computer-based model of an example crane hook which may be analyzed using embodiments.

FIG. 13B shows clamped boundary conditions and distributed forces regions of the crane hook model from FIG. 13A.

FIG. 13C shows two distinct mesh models for the crane hook model from FIG. 13A

FIG. 13D shows an overlay of the two mesh models from FIG. 13C, highlighting differences between the two mesh models.

FIGs. 14A - 14D illustrate topology optimization results for the two mesh models defined in relation to FIGs. 13A-D.

FIG. 15A shows a modeling and design space of a computer-based model of an inverter mechanism, and also includes additional design variables used to demonstrate implementations of embodiments disclosed herein.

FIG. 15B shows a deterministic optimized design of the inverter mechanism from FIG. 15A.

FIGs. 16A - 16D illustrate topology optimized results generated using a structured coarse mesh, an unstructured coarse mesh, a structured fine mesh, and an unstructured fine mesh, respectively.

FIGs. 17A shows a design space and mesh for a computer-based model of an aircraft bracket to demonstrate embodiments.

FIG. 17B shows deterministic optimized designs for the aircraft bracket model from FIG. 17A.

FIG. 18 illustrates optimized designs for the aircraft bracket defined in relation to FIGs. 17A and 17B generated using different optimization conditions.

FIG. 19A illustrates optimization iteration history for relative density of design variables using a novel uncertainty characterization parameter for output displacement as an objective function to be minimized, according to an embodiment.

FIG. 19B illustrates vectors of nodal standard deviations for each optimization iteration in FIG. 19A.

FIGs. 20A - 20C show topology optimization results of the model defined in relation to FIGs. 15A and 15B generated using different optimization conditions.

FIG. 21A illustrates a deterministic optimized compliant mechanism design having a compliant hinge.

FIG. 21B illustrates using geometrical uncorrelated nodal distributions to determine uncertainties, according to an embodiment.

FIGs. 22A - 22C illustrate a design space, mesh, and optimized designs determined using an embodiment, respectively, for an L-shaped beam.

FIGs. 23A - 23D illustrate topology optimization results for the L-shaped beam defined in relation to FIGs. 22A-C.

FIGs. 24A illustrates a center node representing a geometrical perturbation field, as well as variations of sensitivity.

FIG. 24B illustrates a four-node plane stress element for a design variable element of FIG. 24A.

FIG. 24C illustrates a four-node shell element for a design variable element of FIG. 24A.

FIG. 25 is a schematic view of a computer network in which embodiments may be implemented.

FIG. 26 is a block diagram illustrating an example embodiment of a computer node in the computer network of FIG. 25.

DETAILED DESCRIPTION

A description of example embodiments follows.

Deterministic optimization (i.e., optimization of a computer-based model that does not consider geometrical uncertainties), as applied to non-parametric optimization, such as topology, sizing, or shape optimization, may result in optimized designs that are highly mesh-dependent or correspond to a local minimum. Previous robust design optimization methods that consider global geometrical perturbations demonstrate the ability to suppress many local minima in the response function, and thereby, yield improved optimized designs. However, different mesh discretizations sometimes yield fundamentally different optimized designs that cannot be suppressed using global uncertainty formulations. This is problematic as users expect consistent optimization results when evaluating the same object. Further, these fundamentally different optimized designs leave users unsure as to which design is appropriate for use and application in the real-world. Embodiments solve these problems.

An embodiment implements a novel uncertainty measure, based on nodewise uncorrelated local geometric random distributions. Example embodiments disclose a computer-implemented, computationally efficient, generalized first-order method, ensuring improved numerical mesh-independence of optimized designs. Embodiments allow for a semi-intrusive implementation independent of the number of design variables and the design variable type. Discussion herein elaborates on embodiments that implement a local uncertainty measure (e.g., an uncertainty characterization parameter "p") to various numerical examples that address both numerical and physical geometrical robustness including the design of compliant hinge mechanisms, as well as stiffness- and stress-based optimization formulations.

Deterministic optimization may yield structurally optimized designs that are very sensitive to even small geometrical imperfections at certain regions in the design. Therefore, minor modifications of the model caused by, e.g., manufacturing uncertainty, material uncertainty, or uncertainty with respect to the numerical discretization (e.g., meshing of a CAD model), may cause significant reductions in structural performance of the real-world object. Furthermore, gradient-based optimization algorithms normally yield solutions corresponding to a local minimum. Obtaining a local minimum in topology optimization is generally a well-known phenomenon [1]. Hence, embodiments disclosed herein also suppress some of the local-minima solutions by applying traditional robustness methods customized to model the uncertainty associated with different numerical discretizations. Therefore, the local-minima are classified as either physical or numerical (mesh-induced). Papadopoulos et al. [2] shows that even simple optimization problems may yield highly non-convex response functions having physical mesh-independent local minima.

In contrast, numerical local minima may be caused by minor geometrical differences in the numerical discretization (mesh). Talischi et al. [3] and [4] show that structured meshes may affect optimized designs by introducing favorable directions in the mesh that align with design features in the optimized solution. Hence, Talischi et al. [3] and [4] applies unstructured polygonal meshes to prevent the mesh from affecting the optimized designs. Additionally, polygonal meshes show no checkerboarding and cannot form single-node connections. However, polygonal meshes are not commonly used and are not widely available in finite element implementations. Generally, regularization is required for optimizations to obtain both mesh-independent designs and to ensure a well-posed optimization formulation [5]. The most common approach for regularization is to use filtering [1], thereby enforcing a length scale. Thus, using a finer mesh for the same regularization does not provide additional design freedom and does not allow for smaller design features in the optimized solutions.

Although unstructured meshes, as well as filtering for regularization, are applied, the numerical experiments disclosed herein demonstrate that, for almost identical meshes, numerical mesh-dependent local minima are frequently obtained even for a filter radius that is much larger than the element sizes.

As such, functionality is needed to provide users with a measurement of "uncertainty" in simulation results generating using mesh models. Embodiments provide such solutions.

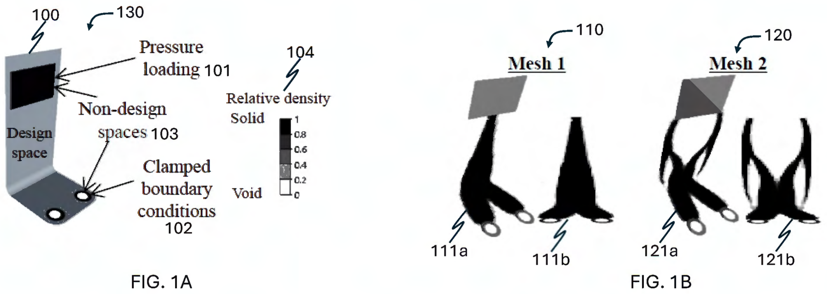

FIG. 1A and 1B illustrate the problematic optimization results from existing methods. FIG. 1A shows a design space 130 and a model of an example L-shape bracket 100. FIG. 1A illustrates components of the L-shaped bracket 100 as specified in the design space 130. Namely FIG. 1A depicts pressure loading area 101 and clamped boundary conditions 102, both of which are defined to be non-design spaces 103. The design space 130 also includes a scale 104 that indicates relative density of the bracket 100.

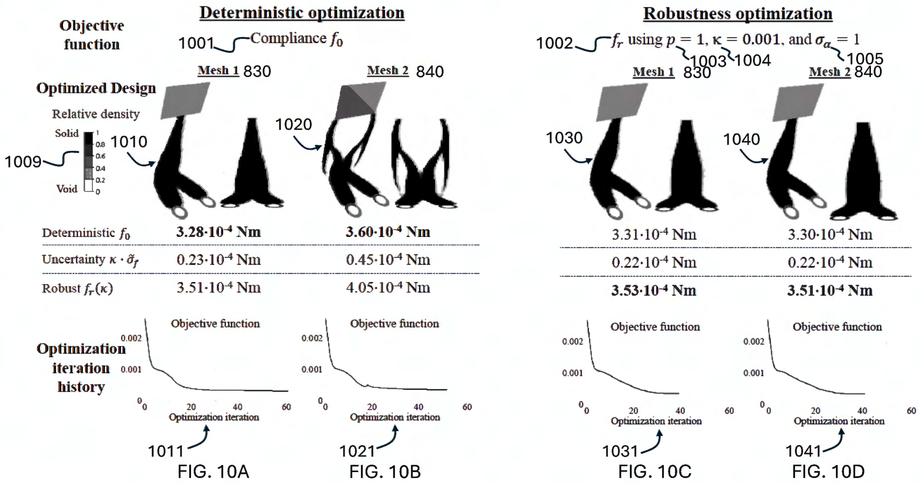

FIG. 1B shows two views 111a-b of optimized design 110 and two views 121a-b of optimized design 120, of the bracket 100 resulting from compliance topology optimizations implemented using two similar, but different, meshes. Although all parameters for the optimization formulation used to determine the designs 110 and 120, such as filter size, were the same, significantly different optimized designs 110 and 120 were obtained. Moreover, the optimized design 120 is shown to be a mesh-induced local minimum, as can be seen from the deterministic optimization iteration history plot 1021 of FIG. 10B, discussed hereinbelow.

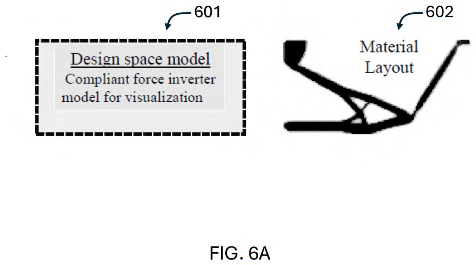

Enforcing a minimal length scale through filtering ensures the manufacturability of optimized designs [6]. However, simple filtering approaches are not always able to enforce a length scale, e.g., compliant mechanism optimization [7]. As a result of these filtering approaches, unphysical hinges occur, or lumped regions having intermediate density elements occur at single nodes in the mesh to mimic a compliant hinge [8]. Therefore, these hinge regions are highly mesh-dependent. A comparison of different filtering techniques is provided in [7]. A review on more advanced approaches, e.g., projection filters is provided in [6], including robust optimization techniques for the material location with respect to under- and over-etching. Similar approaches are also applied to enforce a minimal length scale. Therefore, the present disclosure also investigates the compliant force inverter introduced in [8] and suggested as a reference benchmark in [7], as a benchmark example for embodiments disclosed herein (See FIGs. 6A-D, 15A-B, 16A-D, 19A-B, 20A-C, and 21A-B). The compliant force inverter inverts an input force (yields an output force in the opposite direction) and is a compliant mechanical device using elastic deformation for transmitting forces as well as inverting the output force from compression to tension. The compliant force inverter is utilized as the compliant force inverter benchmark typically has unphysical compliant hinges for deterministic optimization approaches. In the compliance force inverter benchmark examples, the "hinges" are elastic compliant subject to large deformations, whereas the remainder to the mechanism (besides the hinges) is practical rigid and practical inelastic compared to the overall deformation during the activation of the mechanism.

Numerical mesh-dependence can be considered as epistemic uncertainty since it is possible to reduce the uncertainty using improved modeling [9], i.e., applying finer meshes. Typically, the mesh size (fineness) required to achieve mesh-independence is unknown. Commonly, robust design optimization approaches consider aleatoric uncertainties, but might also be able to address uncertainties originating from the numerical mesh discretization and, therefore, are also briefly discussed herein.

Robust design optimization not only optimizes for deterministic parameters, but may also consider some uncertain parameters and some probabilistic measure of the response. Thus, the response for the optimization might yield a smoother surface and thereby, reduce the likelihood of ending up in a local minimum [10]. For quantifying the probabilistic measure of the response (e.g., mean and variance), approximation methods are required for the uncertainty propagation. The most straightforward approach is the Monte Carlo method [11]. Although generally applicable to non-parametric optimization problems such as topology optimization [12], Monte Carlo methods have extremely high computational costs. Using surrogate models to improve the computational efficiency may lead to issues relating to dimensionality [13]. Therefore, local Taylor expansion-based approaches are often applied for the uncertainty quantification in the context of robust design optimization [10, 14, 15, 16, 17, 18, 19, 20, 21, 22]. A drawback of local Taylor expansion-based approaches is that the gradient of the probabilistic measure with respect to the design variables is less straightforward to evaluate. Doltsinis and Kang [14, 15] apply a Taylor expansion of the discretized static equilibrium and the adjoint method to determine mean and variance of the response as well as the corresponding gradients. This approach has been applied to topology optimization by Lazarov et al. [16], showing the advantages over sampling-based methods. Instead of perturbing the static equilibrium, Lazarov et al. [16] approximates the response function locally using a Taylor series expansion, thereby significantly reducing the computational costs. Using a first-order Taylor expansion requires at most three additional solutions of the adjoint equation systems [17]. For second-order approaches, the computational cost scales linearly with the number of random parameters [18, 19]. While the aforementioned approaches ([16], [17], [18]) require highly intrusive numerical implementations, Steltner et al. [10, 20] and Kruger et al. [19, 21] propose semi-intrusive approaches of Taylor expansion-based robust optimization.

Existing methods for robust optimization consider aleatoric uncertainties of the applied loads, the material properties, or the geometry. Robust optimization methods have not been specifically used to address epistemic uncertainty. Approaches that consider geometric deviations, however, might be suitable to also capture the uncertainty of the mesh discretization. In the literature, different parametrization approaches are presented for geometrical uncertainties. Jansen et al. [23] implements geometrical uncertainties using a randomly perturbed density filter, where the mesh is not affected by the uncertainties. Whereas [18] implements geometrical uncertainties using a direct geometrical perturbation of the nodes of the finite element mesh. Another method describes the geometrical uncertainties assuming a random distribution for the projection parameter of the heavy-side projection [12]. Uncorrelated geometrical nodal uncertainties are applied in [24]. However, the uncorrelated uncertainties in [24] are used to model manufacturing uncertainties for discrete truss structures. Uncertainty formulations for continuum models generally assume a spatial correlation tied to a specific correlation length, enforcing the uncertainty formulation to be independent of the nodes of the finite element model.

Considering mesh perturbation in the same way as geometric uncertainties is considered in the aforementioned references, but these aforementioned references do not resolve the problem of obtaining mesh-dependent optimization results. Specifically, existing methods do not resolve the problem of obtaining mesh-dependent optimization results because applied geometric uncertainties are modeled using random fields, where the spatial correlation smears out local effects. Therefore, embodiments geometrically perturb the nodal coordinates independently, i.e., without considering spatial correlation. Such an approach presents two challenges.

Firstly, without spatial correlation for the geometrical uncertainties, the number of random parameters cannot be reduced, e.g., by using techniques such as Karhunen-Loeve expansion or Expansion Optimal Linear Estimator (EOLE) method [25]. This first challenge is circumvented using an approach where the computational cost is independent of the number of random parameters. Secondly, without spatial correlation for the uncertainties, the standard deviation of the response is mesh-dependent. To solve this second challenge embodiments disclose an $L^p$-norm-based uncertainty measure (i.e., an uncertainty characterization parameter "$p$") instead of using standard deviation. As described herein, embodiments demonstrate that for $p = 1$ the uncertainty measure is independent of the mesh discretization, and when embedded into a robust design optimization formulation the uncertainty measure allows mesh-independent minima to be determined. Furthermore, embodiments demonstrate show for higher values of $p$, the uncertainty measure enables the suppression of highly localized phenomena like compliant hinges or stress singularities.

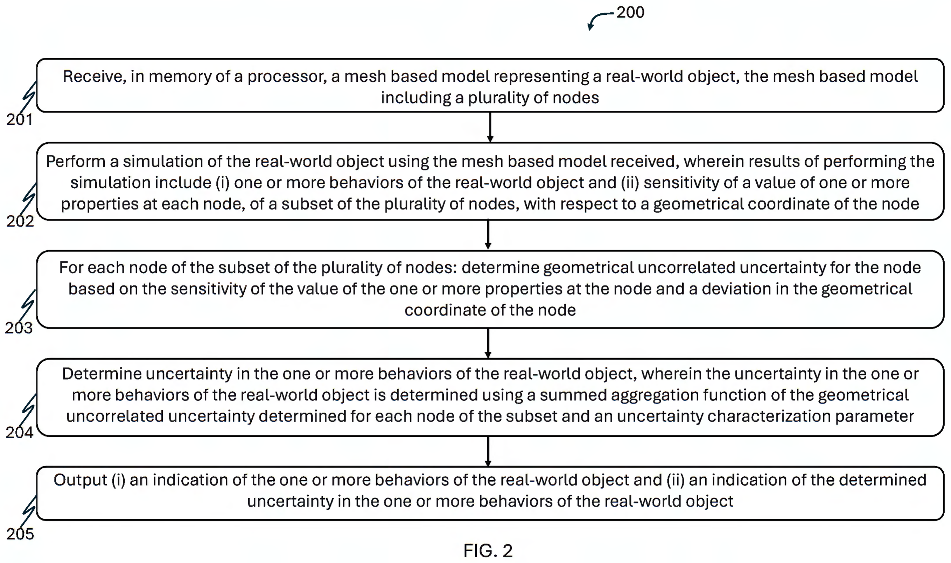

FIG. 2 is a flowchart of a computer-implemented method 200 for simulating objects and determining uncertainty in the simulation results according to an embodiment. The method begins at step 201 by receiving, in memory of a processor, a mesh based model representing a real-world object, where the mesh based model includes a plurality of nodes. At step 202, a simulation of the real-world object is performed using the mesh based model received. Results from performing the simulation may include (i) one or more behaviors of the real-world object and (ii) sensitivity of a value of one or more properties at each node, of a subset of the plurality of nodes, with respect to a geometrical coordinate of the node. According to an embodiment, a "sensitivity" of a value as it refers to properties of a node may reflect a change in the value based on variations in geometrical coordinates of the node. Thereafter, at step 203, for each node of the subset of the plurality of nodes, the method 200 determines geometrical uncorrelated uncertainty for the node based on the sensitivity of the value of the one or more properties at the node and a deviation in the geometrical coordinate of the node. As described herein, the term "uncorrelated" refers to the uncertainty of each node being independent of the uncertainty of each other node. In turn, at step 204, uncertainty (e.g., aleatoric uncertainty and/or epistemic uncertainty) in the one or more behaviors of the real-world object is determined. In the method 200 the uncertainty in the one or more behaviors of the real-world object is determined using a summed aggregation function of the geometrical uncorrelated uncertainty determined for each node of the subset and an uncertainty characterization parameter ($p$). To continue, at step 205, the method 200 outputs (i) an indication of the one or more behaviors of the real-world object and (ii) an indication of the determined uncertainty in the one or more behaviors of the real-world object.

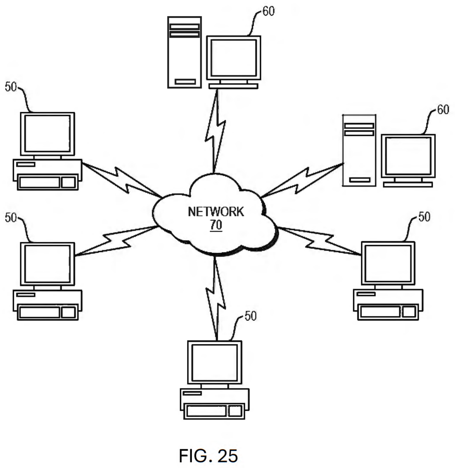

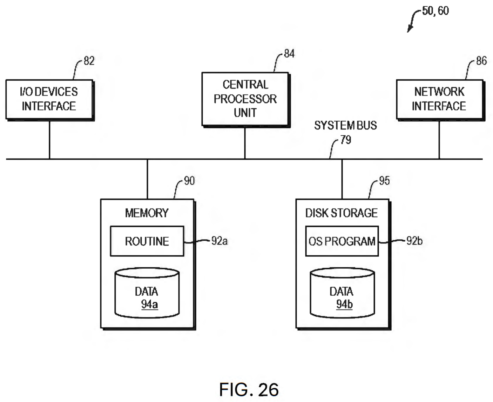

As noted, the method 200 is computer-implemented and, as such, the functionality and effective operations, *e.g.,* the receiving 201, performing 202, determining 203, determining 204, and outputting 205, may be automatically implemented by one or more digital processors. The method 200 can be implemented using any computer device or combination of computing devices known in the art. Among other examples, the method 200 can be implemented using computer(s)/device(s) 50 and/or 60 described hereinbelow in relation to FIGs. 25 and 26.

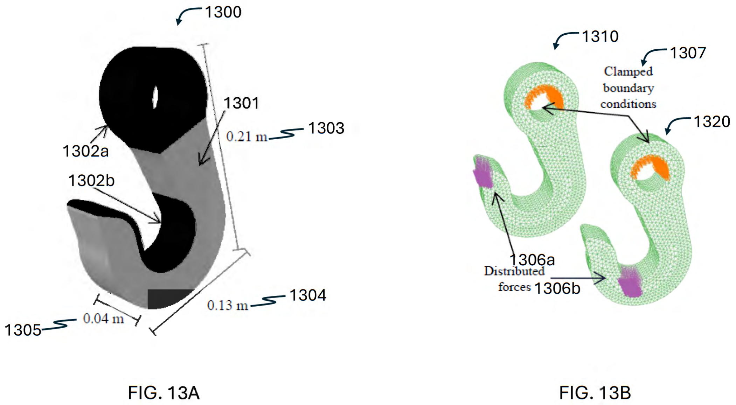

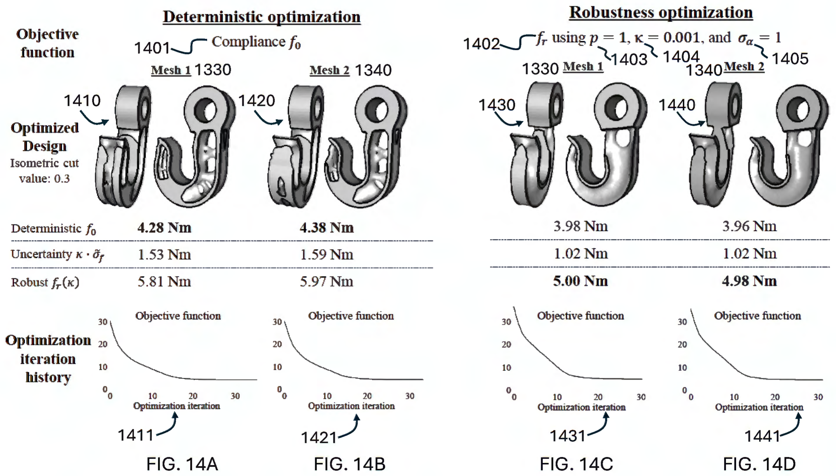

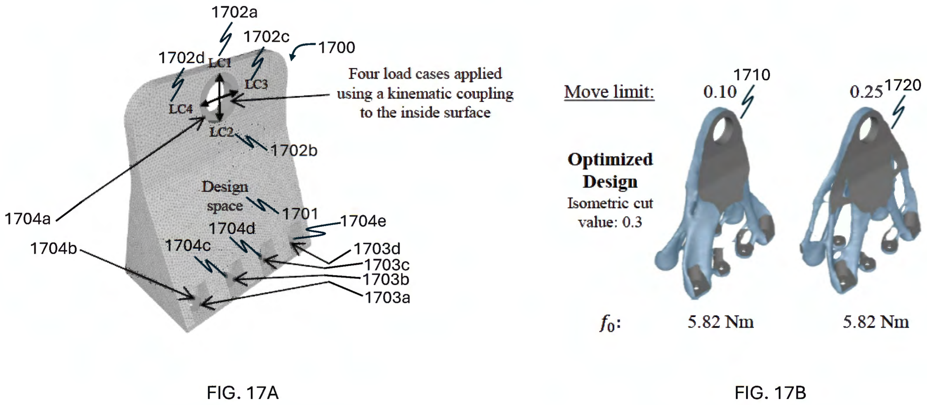

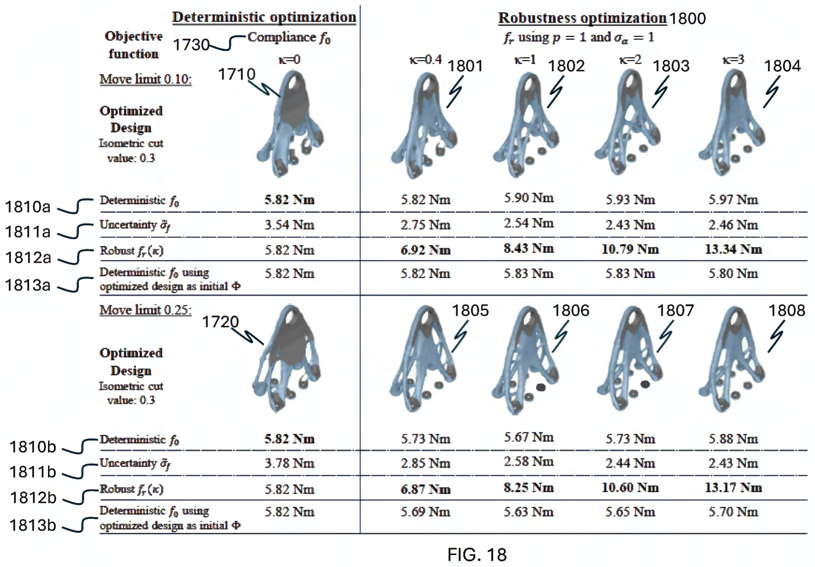

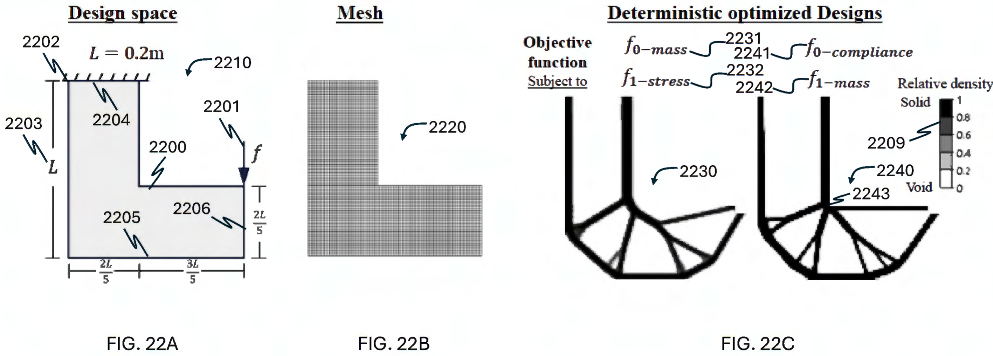

In an embodiment of the method 200, the mesh based model representing the real-world object received at step 201 may be any mesh based model known in the art. For instance, according to an embodiment, the mesh based model may be a finite element model, a boundary element model, a finite difference model, or a finite volume model, amongst other examples. In embodiments, the real-world object represented by the mesh based model can be any object. For instance, in an embodiment, the real-world object is a bracket, a compliance force inverter (*See* FIGs. 6A-D, 15A-B, 16A-D, 19A-B, 20A-C, 21A-B), a crane hook (*See* FIGs. 13A-D and 14A-D), an aircraft bracket *(See* FIGs. 17A-B and 18), a Norwegian Sock *(See* FIGs. 22A-C) among a plurality of other examples of real-world objects.

Further, in an embodiment of the method 200, a simulation of the real-world object may be performed at step 202 or otherwise implemented in any suitable software solution capable of including the one or more behaviors of the real-world object, and the sensitivity of a value of one or more properties at each node with respect to a geometrical coordinate of the node. Such a simulation may, for example, specify any load scenarios and boundary conditions relating to the model and simulate the real-world object subject to the load scenarios and boundary conditions. Further, the simulation may be performed at step 202 in accordance with principles known to those of skill in the art. For instance, in an embodiment, the optimization framework and mathematical programming may be implemented using the optimization tool Tosca® Structure [33], while the finite element solver for the primal solutions and adjoint sensitivities may be obtained using the structural solver Abaqus® [31] and both Tosca® Structure [33] and Abaqus® [31] may be utilized to implement the method 200 and perform the simulation at step 202.

At step 203 of the method 200, determining geometrical uncorrelated uncertainty for the node based on the sensitivity of the value of the one or more properties at the node and a deviation in the geometrical coordinate of the node may be performed by using a 2-norm function of the sensitivity of the node to yield the first order approximation of the standard deviation with respect to the geometrical uncorrelated uncertainty of the node (e.g., FOSM method for uncertainty propagation).

At step 204 of the method 200, determining uncertainty in the one or more behaviors of the real-world object using a summed aggregation function of the geometrical uncorrelated uncertainty determined for each node of the subset and an uncertainty characterization parameter may be performed in accordance with Equations (11) and (12) described herein below.

At step 205 of the method 200, outputting an indication of the one or more behaviors of the real-world object may include providing a representation of a stress, a strain, a force, a displacement, a velocity, an acceleration, an eigenfrequency, a temperature, and a flux associated with the real-world object to a user via a graphical user interface (GUI) coupled to the processor. Further, at step 205, outputting an indication of the determined uncertainty may provide the user with an indication of areas of the mesh based model determined to have a high degree of uncertainty. For example, an embodiment may identify the areas of the mesh determined to have a high uncertainty based on nodal uncertainties, i.e., standard deviations with respect to the uncorrelated geometrical uncertainties. Embodiments may identify said areas in an output visualization by highlighting a representation of the object or providing a notification to a user via the GUI that a particular area has been identified as having a high uncertainty. Moreover, an embodiment may provide a total uncertainty measure to the user using the aggregation function, as shown in Equations (11) and (12) hereinbelow.

Moreover, embodiments provide real-world improvements in design and modeling of real-world objects, as well as advantages in manufacturing real-world objects. By determining and indicating regions of an object in the mesh based model identified as having a high degree of uncertainty, embodiments provide a designer or engineer with indications of regions of the model most susceptible to, for example, tolerance concerns in the manufacturing process. By presenting designers and engineers with the indication of the one or more behaviors of the real-world object as well as the determined uncertainty in the one or more behaviors of the real-world object, designers and engineers may perform any necessary re-designs to alleviate the areas of the model with high uncertainty. In turn, the redesigned objects may be manufactured.

In further embodiments, the mesh based model obtained at step 201 can represent a candidate design of a real-world object, e.g., a plane, a car, a building, a bridge, etc. In such an embodiment, the determined uncertainty may be used to influence manufacturing tolerances as well as influence a standard for design safety. Moreover, in such an example implementation, the method 200 can be used to evaluate candidate designs and determine which designs meet requirements. In turn, a real-world object that meets design requirements, as determined through use of the method 200, can be manufactured.

Further, embodiments of the method 200 may be used to improve and re-design real-world objects. In one such example embodiment, measurements may be taken of an existing real-world object, and the measurements may be input to a computer processing environment to generate a mesh based model representing the real-world object. This mesh based model may then be received at step 201 and the method 200 may be implemented to determine behaviors of the real-world object and uncertainty in the behaviors. The determined behavior may be used to evaluate modifications to the design of the real-world object, e.g., through iterating the method 200, to determine an optimized design of the real-world object. The existing real-world object can, in turn, be modified to correspond to the determined optimized design or the real-world object with the optimized design may be manufactured.

An embodiment may include receiving an indication of a value of the uncertainty characterization parameter ($p$), for example, via a user input.

In an embodiment, responsive to the uncertainty characterization parameter being above a threshold (e.g., the uncertainty characterization parameter is a number ($p$) where $p > 1$), the indication of the determined uncertainty may include an indication of contribution by one or more nodes, of the subset of the plurality of nodes, to the determined uncertainty. In such an embodiment, the indication of contribution may include an indication of at least one of a magnitude (e.g., a vector magnitude) and a location (e.g., a nodal geometrical location).

In another embodiment, responsive to the uncertainty characterization parameter being below a threshold (e.g., the uncertainty characterization parameter is a number ($p$) where $p < 2$, e.g., $p = 1$), the indication of the determined uncertainty is free from an indication of contribution to the determined uncertainty.

According to an embodiment of the method 200, determining the uncertainty in the one or more behaviors of the real-world object may include determining a regularized geometrical uncorrelated uncertainty for two or more nodes of the subset of the plurality of nodes as a function of a weighted average of the geometrical uncorrelated uncertainty determined for each of the two or more nodes. To continue, such an embodiment determines the uncertainty in the one or more behaviors of the real-world object using (i) the summed aggregation function of the geometrical uncorrelated uncertainty determined for each node of the subset, (ii) the uncertainty characterization parameter, and (iii) the regularized geometrical uncorrelated uncertainty determined.

In an embodiment of the method 200, the one or more behaviors of the real-world object (e.g., resulting from the simulation performed at step 202) may include at least one of: a stress, a strain, a force, a displacement, a velocity, an acceleration, an eigenfrequency, a temperature, and a flux.

An embodiment of the method 200 further includes defining a design response of the real-world object as an objective function, wherein the design response is based on the determined uncertainty in the one or more behaviors of the real-world object and the one or more behaviors of the real-world object. Such an embodiment may continue by defining an optimization problem as a function of the design response defined, and at least one constraint. Moreover, such an embodiment may iteratively modify at least one design variable in the mesh based model representing the real-world object and execute the performing the simulation (step 202), the determining geometrical uncorrelated uncertainty (step 203), and the determining uncertainty in the one or more behaviors of the real-world object using the mesh based model with the modified at least one design variable (step 204), until the optimization problem is satisfied.

In another embodiment of the method 200, for a given node of the subset of the plurality of nodes, the sensitivity of a value of one or more properties at the given node with respect to a geometrical coordinate of the given node is a magnitude of a vector.

The method 200 described hereinabove is an example method for simulating objects and determining uncertainties within the results. Hereinbelow, examples of implementing and applying embodiments, e.g., the method 200, to example real-world objects and the results of said examples are discussed.

Optimization Problem Formulation

The optimization formulation (e.g., the objective and the constraints) described below introduces a design problem for which an embodiment's uncertainty approach is applied in order to obtain a robust optimized design with respect to geometrical uncertainties. Non-parametric structural optimization is an iterative process which determines optimized structural properties of an object represented by a model e.g., a model representing a mechanical object such as a car. A general optimization formulation is given by Equation (1) below:

$$
\min_\phi f_0(\phi) \\
\left\{ s.t. \left\{ \begin{matrix} R\big(\phi, u(\phi)\big) = 0 \\ f_i\big(\phi, u(\phi)\big) \leq 0 \\ \phi_L \leq \phi \leq \phi_U \end{matrix} \right. \right. \tag{1}
$$

where $f_0$ is the objective function subject to the finite element residual $\boldsymbol{R}(\phi, u(\phi))$ implicitly defining the response of the system $f_i$ is a general set of inequality constraints, and $\phi$ is a design vector. The design vector $\phi$ is constrained by the lower and upper bounds $\phi_L$ and $\phi_U$, respectively. For topology optimization, according to an embodiment, the design variable $\phi$ defines relative density of each design element and applies the solid isotropic material interpolation with penalization (SIMP) approach [26]. Thus, $\phi$ is bounded between zero and one. Compliance is frequently chosen as the objective function $f_0$ to be minimized subject to a relative volume or mass constraint $f_i$. In thickness sizing optimization, for example, the design variable is the thickness of each shell element. It is noted that the numerical examples described herein assume linear finite element modeling. However, this is not a requirement of embodiments and, instead embodiments can be directly applied to nonlinear finite element modeling, amongst other examples.

A regularization of the design variable is required for the topology optimization problem in Equation (1) to be well-posed. Therefore, the filtering introduced in [1] is applied, in an embodiment, to achieve mesh-independence, introduce a length scale, and prevent checkerboarding. An overview of different filter types and their properties can be found in [7]. An embodiment applies a cone-shaped sensitivity filter [27] as well as a design variable filter based on successive erode and dilate operations [28]. Subsequently, the optimization problem is solved iteratively using a mathematical programming-based Method of Moving Asymptotes proposed in [29].

For robust design optimization, some of the input parameters are assumed to be randomly distributed. Therefore, any response is a random variable given by an unknown probability distribution. Hence, the deterministic response function is replaced by a weighted function of the mean $\mu_f$ and the standard deviation $\sigma_f$ as illustrated by Equation (2) below:

$$
f_r(\alpha, \phi) = \mu_f(\alpha, \phi) + \kappa \sigma_f(\alpha, \phi), \tag{2}
$$

where $\phi$ is the vector containing the design variables, $\alpha$ is the vector containing the random variables, and $\kappa$ is a weighting factor defining the impact of the standard deviation. The robust response function $f_r$ can be applied either as an objective function or as a constraint.

Taylor Expansion-Based Robustness Approach

The Taylor expansion-based robustness approach described below provides a method for determining uncertainty propagation through an implicitly defined function, for example, the finite element formulation. The mean $\mu_f$ and standard deviation $\sigma_f$ with respect to uncorrelated random distributions, characterized by the mean $\mu_{\alpha,i}$ and the standard deviation $\sigma_{\alpha,i}$, are approximated using a first-order Taylor expansion as defined by Equations (3) and (4) below:

$$
\mu_f \approx f(\mu_\alpha), \text{where } \mu_\alpha = (\mu_{\alpha,1}, \dots, \mu_{\alpha,i}, \dots, \mu_{\alpha,M})^{\mathrm{T}}, \tag{3}
$$

$$
\sigma^2_f \approx \sum_{i=1}^{M} \frac{df(\mu_\alpha)^2}{d\alpha_i} \sigma^2_{\alpha,i}, \tag{4}
$$

where $M$ is the total number of random parameters; see [30] for detailed derivations. Here, all random parameters are assumed to be uncorrelated. This can be achieved using a linear transformation and, therefore, causes no loss of generality. Thereby, the corresponding gradients with respect to the design variables $\phi$, required for the optimization, are defined by Equations (5) and (6) below:

$$
\frac{d\mu_f}{d\phi} = \frac{df(\mu_\alpha)}{d\phi}, \tag{5}
$$

$$\frac{d\sigma^2_f}{d\phi} = 2\sum_{i=1}^{M} \frac{d^2 f(\mu_\alpha)}{d\alpha_i d\phi}\frac{df(\mu_\alpha)}{d\alpha_i}\sigma^2_{\alpha,i}. \qquad (6)$$

For linear approximations, the mean value is equal to the deterministic response function. The gradient of the standard deviation with respect to the design variable is then calculated using the chain rule as shown in Equation (7) below:

$$\frac{d\sigma_f}{d\phi} = \frac{1}{2\sigma_f}\frac{d\sigma^2_f}{d\phi}. \qquad (7)$$

Calculating the mixed second-order derivatives in Equation (6) can be demanding in terms of computational time and memory. The adjoint method eliminates the computation of the second derivatives, but the adjoint system differs for every combination of the response function and the random variable.

The principal sensitivity First-Order Second-Moment method (ps-FOSM; see [21] for a detailed derivation) reformulates the gradient of the variance so that only one directional derivative is required in addition to the deterministic gradient $df/d\phi$ and the gradient with respect to the random vector $df/d\alpha$. Hence, if the gradient with respect to the random vector $df/d\alpha$ is available in the finite element implementation, then the robust sensitivities can be calculated using only one single non-intrusive finite difference evaluation. For instance, when considering geometrical uncertainty, the derivative with respect to node positions can be mapped to arbitrary uncertainty parameterizations. The present gradient $df/d\alpha$ is available in the finite element solver Simulia® Abaqus® [31], where the nodal gradients are traditionally applied for gradient-based shape optimization.

When assuming equal and uncorrelated random distributions of the random variables, the principal sensitivity direction is given by Equation (8) below:

$$\Delta\alpha = \varepsilon\sigma^2_\alpha \frac{df}{d\alpha}(\mu_\alpha). \qquad (8)$$

Inserting a finite difference step into the direction (8) and reordering yields the gradient of the variance as shown in Equation (9) below:

$$\frac{d\sigma^2_f}{d\phi} \approx \frac{2}{\varepsilon}\left[\frac{df}{d\phi}(\mu_\alpha + \Delta\alpha) - \frac{df}{d\phi}(\mu_\alpha)\right]. \qquad (9)$$

Note that, $\varepsilon$ is a scaling factor that must be chosen properly; see [21].

Proposed Numerical Robustness Method

The proposed numerical robustness method described below outlines example methods of defining geometrical uncertainties combined with a novel uncertainty measure that may be implemented by embodiments. Embodiments achieve robust optimized solutions with respect to the geometrical nodal coordinates of finite element meshes. A potential approach to achieve robust optimized solutions could be to consider a mesh as a discretized random field, assuming a correlation function, and then solve the robust design optimization problem using Equation (2). Nevertheless, numerical experiments show that such approaches do not solve the optimization problem consistently, as utilizing different meshes cause rather different optimized designs. Furthermore, the choice of the correlation function cannot be determined or justified if there is no physical uncertainty to be modeled., i.e., the "correct" correlation function cannot be observed in measurements. This observation motivates an approach presented by embodiments disclosed herein. Firstly, embodiments may define an uncertainty parametrization where the geometrical nodal positions are modeled without any assumptions on the correlation between nodal uncertainties. Secondly, embodiments may introduce a new uncertainty measure based on an uncorrelated nodal uncertainty. Finally, the gradient of the present geometrical uncertainty measure is derived, and several aspects of the numerical implementation are disclosed.

Nodewise Geometrical Uncorrelated Local Distributions

In order to enforce as few assumptions as possible, an embodiment considers each coordinate of each node as an independent random variable $\alpha$. In such an embodiment, the mean of each variable equals the nominal value and the standard deviation is denoted $\sigma_\alpha$. As shown later, the choice of $\sigma_\alpha$ is omitted. No specific distribution type is assumed.

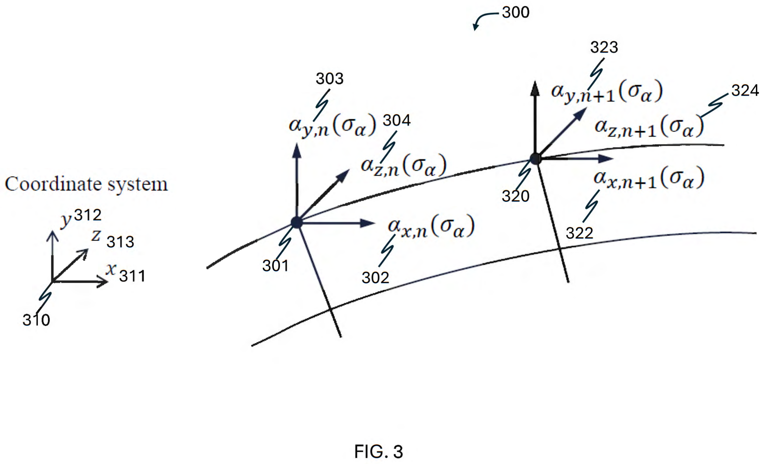

FIG. 3 illustrates an example mesh 300, according to an embodiment, with nodewise local uncorrelated geometrical distributions $\alpha$ at the discrete coordinates of the nodes $i$ ($n$) 301 and $i$+1 ($n$+1) 320 (i.e., the uncertainty formulation from step 203 of the method 200). Each coordinate direction (($x$ 311, $y$ 312, $z$ 313) as illustrated by coordinate system compass 310) is considered an independent random variable characterized by the same probability distribution and standard deviation $\sigma_\alpha$. For example, as illustrated in mesh 300, discrete nodal coordinate 301 has associated vector magnitude 302 representing deviation in the $x$ axis ($\alpha_{x,n}(\sigma_\alpha)$), associated vector magnitude 303 representing deviation in the $y$ axis $\alpha_{y,n}(\sigma_\alpha)$, and associated vector magnitude 304 representing deviation in the z axis $\alpha_{z,n}(\sigma_\alpha)$. Likewise, discrete nodal coordinate 320 has associated vector magnitude 322 representing deviation in the $x$ axis ($\alpha_{x,n+1}(\sigma_\alpha)$), associated vector magnitude 323 representing deviation in the $y$ axis $\alpha_{y,n+1}(\sigma_\alpha)$, and associated vector magnitude 324 representing deviation in the $z$ axis $\alpha_{z,n+1}(\sigma_\alpha)$.

The choice of having no correlation between the geometrical nodal positions might appear counterintuitive. If the scatter of the nodal positions was used to model geometric variations as in [18], then the mesh is a discretization of the random field describing the geometrical uncertainty. Hence, some spatial correlation is to be expected. However, embodiments may model epistemic uncertainty, and any spatial correlation smears out local effects, which avoids obtaining the desired numerical robustness against geometrical mesh distributions.

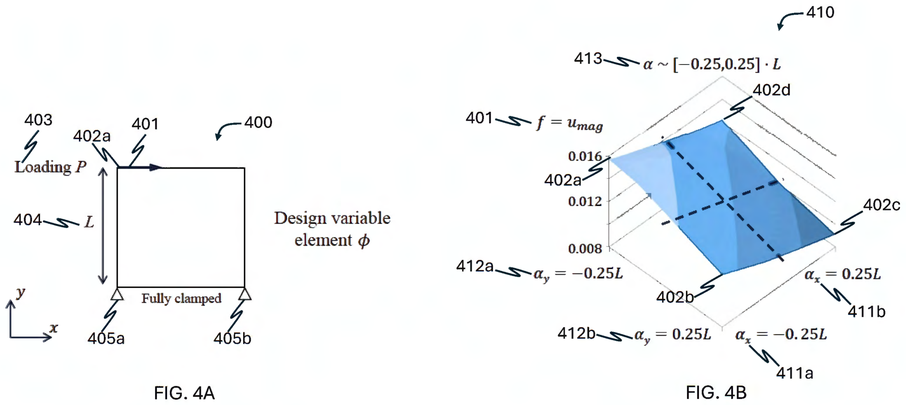

Not choosing a spatial correlation comes with two drawbacks. Firstly, using a correlation allows the number of random variables to be reduced, for example, using the Karhunen-Loeve expansion or the expansion optimal linear estimator (EOLE) method [25]. Usually, the computational cost of most robust optimization approaches scales with the number of random variables, causing practically infeasible computational costs for most approaches. However, an embodiment avoids this scaling between computational cost and the number of random variables by using a first-order approximation, such as the ps-FOSM method, which imposes a computational cost that is independent of the number of random variables. The validity of using linear (e.g., first order) approximations for the proposed geometrical uncertainty is shown in FIGs. 4A and 4B. The results in FIGs. 4A and 4B illustrates the displacement magnitude of a single mesh element 400 as a function of the geometrical variations in the x- and y-coordinates of the loaded node.

FIG. 4A shows a representation of a mesh element 400 to illustrate the variations of the displacement magnitude $f$ = $u_{mag}$ 401 as a response of the in-plane geometrical perturbations $\alpha_x$ in the x-direction and $\alpha_y$ in the y-direction of the top-left node 402a. In the mesh element 400 nodal loading $P$ 403 causes nodal magnitude displacement. $L$ 404 represents the element length, and the boundary conditions 405a-b are fully clamped. FIG. 4B is a representation 410 illustrating the variations of $f$ = $u_{mag}$ 401 for the geometrical perturbations $\alpha_x$ 411a-b and $\alpha_y$ 412a-b of a four-node (402a-d) plane stress element (CPS4 [31]), where $\alpha$ = [-0.25, 0.25] · $L$ 413. The numerical observation in FIG. 4B shows a linear dependence of the displacement magnitude 401 upon the small nodal geometrical perturbations 411a-b and 412a-b.

A second drawback of not utilizing a spatial correlation is that when modifying or refining a mesh, the shape of local geometrical perturbations changes, which would be regularized if a spatial correlation function was used. Although this result (modifications or refinements of a mesh changing the shape of local geometrical perturbations) is intended by an embodiment, modeling or refining the mesh according to an embodiment causes changes in the standard deviation of the response function as the number and location of the nodes of the mesh change. Therefore, disclosed herein is a new uncertainty measure different from the standard deviation.

Novel Uncertainty Measure for Geometrical Uncorrelated Distributions

Disclosed hereinbelow is a novel generalized first-order uncertainty measure using the proposed uncertainty parametrization introduced above in relation to FIGs. 3 and 4. The novel generalized first-order uncertainty measure described herein may be implemented in embodiments, for instance, at step 204 of the method 200.

Standard deviation is commonly selected as an uncertainty measure for geometrical scatter [10, 12, 14, 15, 16, 17, 18, 19, 20, 21, 22, 23, 24] due to its mathematical properties. Geometrical scatter may be understood as the geometrically uncertain position of the nodes of the mesh, i.e., the nodal uncorrelated geometrical uncertainty. However, when using uncorrelated nodal uncertainties as described herein, standard deviation of a response function depends upon the discretization, i.e., the mesh refinement. Therefore, embodiments dislcose an alternative measure for the geometrical scatter.

Kanno [32] reviews different concepts for robust design optimization and shows that different robustness measures can be considered as variants of the $L^p$-norm based uncertainty, as shown by the Equation (10) below:

$$\tilde{\sigma}_f = \left( \sum_{i=1}^M \left| \frac{df}{d\alpha_i} \delta_{\alpha_i} \right|^p \right)^{\frac{1}{p}}, \tag{10}$$

where the amount $\alpha$ scatters, is indicated by the scalar $\delta_\alpha$. Considering that $f$ is a linear function of all $\alpha_i$ and assuming the factors $\alpha_i$ to be bounded in intervals of width $2\delta_{\alpha_i}$, then the $L^1$-norm provides the worst-case combination of $\alpha_i$. When

assuming that all $\alpha_i$ are bounded in a hyper-ellipsoid with semi-axes length $\sqrt{\delta_{\alpha_i}}$, then the $L^2$-norm provides the worst-case combination of $\alpha_i$. If $\delta_{\alpha_i}$ is the standard deviation of $\alpha_i$ and all $\alpha_i$ are assumed to be uncorrelated, then the $L^2$-norm equals the standard deviation of the response. Kanno [32] also mentions works in which the $L^\infty$-norm was used as objective, which is approximated using a high exponent $p$ in Equation (10).

For robustness optimization with respect to discretization uncertainty, an embodiment proposes using the $L^2$-norm of the three spatial directions per node and then the $L^p$-norm to combine the contributions of all nodes. It may be necessary to apply the $L^2$-norm at the nodal level; otherwise, isotropy of the proposed measure (i.e., the measure being independent of the chosen coordinate system) may not be fulfilled.

In particular, an embodiment computes the $L^2$ norm for the uncertainty of a single node using Equation (11) below:

$$\sigma_{f,n} = \left( \frac{df_\mu}{d\alpha_{x,n}}^2 + \frac{df_\mu}{d\alpha_{y,n}}^2 + \frac{df_\mu}{d\alpha_{z,n}}^2 \right)^{\frac{1}{2}} \sigma_\alpha. \qquad (11)$$

This measure of uncertainty for a single node given by Equation 11 corresponds to the standard deviation of the response $f$ induced by the uncertainty of a single node n and approximated by the FOSM method. Here, $\sigma_\alpha$ is the standard deviation of the nodal position, which is assumed to be identical in all directions for all nodes, i.e., $\sigma_{\alpha,i} = \sigma_\alpha$. Afterwards, an embodiment aggregates the measure in Equation (11) over all geometrical discrete points using the $L^p$ norm, defined as Equation (12) below:

$$\tilde{\sigma}_f = ||\sigma_f||_p = \left( \sum_{n=1}^N \sigma_{f,n}^p \right)^{\frac{1}{p}} = \left( \sum_{n=1}^N \left( \sqrt{\left( \frac{df_\mu}{d\alpha_{x,n}}^2 + \frac{df_\mu}{d\alpha_{y,n}}^2 + \frac{df_\mu}{d\alpha_{z,n}}^2 \right)} \sigma_\alpha \right)^p \right)^{\frac{1}{p}} =$$

$$\left( \sum_{n=1}^N \left( \left\| \frac{df_\mu}{d\hat{\alpha}_n} \right\|_2 \right)^p \right)^{\frac{1}{p}} \sigma_\alpha. \qquad (12)$$

For $p = 1$ and assuming $f$ is linear approximated, the uncertainty measure $\tilde{\sigma}_f$ can be seen as a measure of the worst-case combination of single-node perturbations impacting the response $f$. For $p = 2$, $\tilde{\sigma}_f$ equals the standard deviation, while for large values of $p$, $\tilde{\sigma}_f$ approaches the maximum norm and only describes the largest nodal standard deviation present in the mesh equal to the most critical location in the mesh with respect to a geometrical variation. Hereinbelow, the proposed generalized uncertainty measure $\tilde{\sigma}_f$ in Equation (12) is further examined, proving its superiority in comparison to the standard deviation for the proposed geometrical uncertainty parametrization.

For large values of $p$, a mesh-dependent localized uncertainty measure approximating the largest nodal standard deviation is obtained, whereas mesh-independence is recovered for the proposed uncertainty measure using $p = 1$. Since the responses applied in a topology optimization formulation are generally mesh-independent and not affected by rigid body movements of the domain, the integral of $df_\mu/d\hat{\alpha}$ over the domain is equal to zero. Integration over the domain is equivalent to a summation of the nodal values. Consequently, the summation of the magnitudes of $df_\mu/d\hat{\alpha}$ yields a mesh-independent constant.

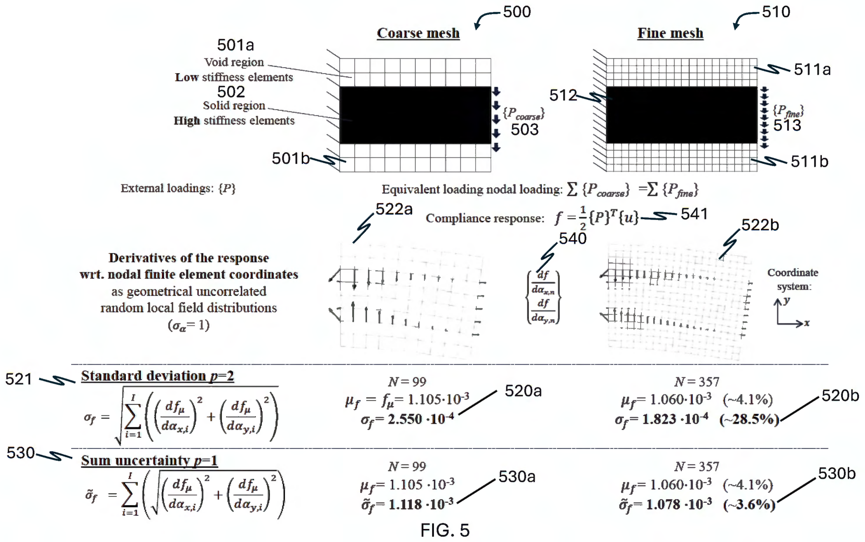

FIG. 5, discussed herein below, shows $df_\mu/d\hat{\alpha}$ for two different meshes and the compliance response values, as well as the proposed uncertainty measure for $p = 1$ and the standard deviation for $p = 2$. In FIG. 5 mesh-independence of the proposed uncertainty measure is shown for $p = 1$ as the deterministic response function $\mu_f$ changes by 4.1% between the two different meshes and the uncertainty measure changes by 3.6%, which can be considered numerically the same.

FIG. 5 illustrates a sensitivity study using a coarse mesh 500 and a fine mesh 510. The coarse mesh 500 includes void regions 501a-b and a solid region 502 and, likewise, the fine mesh 510 includes void regions 511a-b and void region 512. FIG. 5 also shows the standard deviation (determined using equation 521) results 520a for the coarse mesh 500 and standard deviation results 520b for fine mesh 510 when $p = 2$. Moreover, FIG. 5 shows the sum uncertainty (determined using equation 530) results 530a for coarse mesh 500 and the sum uncertainty results 530b for fine mesh 510 when $p = 1$ 530. For the sensitivity study using the coarse mesh 500 and fine mesh 510 both models are attached equivalently to the same boundary conditions and subject to equivalent loadings $P$ 503 and 513, respectively. The solid regions 502 and 512 and void regions 501a-b and 511a-b of the models 500 and 510 are modeled using a linear elastic isotropic material with a Poisson's ratio of 0.30 and the solid regions 502 and 512 have a Young's modulus of 1.0 and the void regions 501a-b and 511a-b have a Young's modulus of ($1.0 \cdot 10^{-9}$). The coarse model 500 is meshed by 80 four-node plane stress elements (CPS4 [31]) using 99 nodes and the fine model 510 is meshed by 320 four-node plane stress elements (CPS4 [31]) using 357 nodes. The geometrical standard deviation 520a-b is calculated per node using the derivatives of the response function 540 with respect to the nodal finite element coordinates using FOSM. Moreover, the compliance response 541 as well as the uncertainty measure of Equation (12) for $p$ = 1 and the standard deviation for $p$ = 2 are calculated, respectively.

According to an embodiment, the fixed standard deviation $\sigma_\alpha$ must be chosen for the uncertainty measure in Equation (12) when assuming uncorrelated parameters. For the present robust design optimization formulation, the new uncertainty measure $\tilde{\sigma}_f$ in Equation (12) will replace the standard deviation in the objective function given by Equation (2). In addition, the weighting factor $\kappa$ is chosen. As shown in Equation (12), $\sigma_\alpha$ is a linear factor of $\tilde{\sigma}_f$, which is then multiplied by $\kappa$. Hence, choosing $\sigma_\alpha$ and $\kappa$ is equivalent. Therefore, an embodiment sets $\sigma_\alpha$ = 1 without loss of generality and leaves $\kappa$ as the only parameter to be chosen. Numerical studies show that for $p$ = 1 the recommended choice of $\kappa$ is $\kappa \approx 0.1 \cdot \mu_f / \tilde{\sigma}_f$ of the initial optimization iteration. For other values of $p$, no general recommendation is provided as values of $p$ are frequently highly model-dependent.

Additionally, as can be seen by the vectors in plots 522a and 522b of FIG. 5, the nodal gradient generally matches the direction of the density gradient for all nodes that are not associated with the boundary conditions or the loading. This is expected since the position of interior nodes should not influence the structural response for a sufficiently fine mesh. However, adding or removing material on the surface has an influence on the value of the structural response. In combination with the mesh-independence of the proposed uncertainty measure for $p$ = 1, it can be concluded that the proposed uncertainty measure is a measure indicating how sensitive the response function is to adding or removing material at the surface. Furthermore, recognizing that the uncertainty is generally tied to a volume change and that the perturbation of a single node inside of a checkerboard pattern is volume-preserving, then it can be concluded that the proposed method (i.e., applying the uncertainty measure using a weighted version of the objective function in structural optimization) cannot impose a minimum length scale. Thus, the proposed method is applied for the objective function and/or constraints in combination with a regularization as discussed herein.

Semi-Intrusive Gradients with Respect to the Design Variable

The gradient of the uncertainty measure $\tilde{\sigma}_f$ in Equation (12) with respect to the design variable is derived as in Equation (13) below:

$$\frac{d\tilde{\sigma}_f}{d\phi} = \frac{1}{\tilde{\sigma}_f^{p-1}} \sum_{n=1}^{N} \left( \frac{df_\mu}{d\alpha_{x,n}}^2 + \frac{df_\mu}{d\alpha_{y,n}}^2 + \frac{df_\mu}{d\alpha_{z,n}}^2 \right)^{\frac{p}{2}-1} \left( \frac{df_\mu}{d\alpha_{x,n}} \frac{d^2 f_\mu}{d\phi d\alpha_{x,n}} + \frac{df_\mu}{d\alpha_{y,n}} \frac{d^2 f_\mu}{d\phi d\alpha_{y,n}} + \frac{df_\mu}{d\alpha_{z,n}} \frac{d^2 f_\mu}{d\phi d\alpha_{z,n}} \right).$$

$$(13)$$

Note, $\sigma_\alpha$ is set to one. According to an implementation, the principal sensitivity calculation is similar to the derivation in [21] based upon a finite difference approximation and is generalized using a first-order Taylor expansion as shown by Equation (14) below:

$$\frac{df}{d\phi}(\mu_\alpha + \varepsilon\Delta\alpha) \approx \frac{df}{d\phi}(\mu_\alpha) + \frac{d^2 f}{d\phi d\alpha}(\mu_\alpha)\varepsilon\Delta\alpha. \qquad (14)$$

Rearranging Equation (14) to be solved using finite differences yields Equation (15) below:

$$\frac{d^2 f}{d\phi d\alpha}(\mu_\alpha)\Delta \approx \frac{1}{\varepsilon}\left[ \frac{df}{d\phi}(\mu_\alpha + \varepsilon\Delta\alpha) - \frac{df}{d\phi}(\mu_\alpha) \right], \qquad (15)$$

where $\varepsilon$ is a scaling factor. Rewriting Equation (13) to be computed using the general principal sensitivity workflow, similar to [21], yields Equation (16) below:

$$\frac{d\tilde{\sigma}_f}{d\phi} = \sum_{n=1}^{N} \left( \frac{d^2 f_\mu}{d\phi d\alpha_{x,n}}, \frac{d^2 f_\mu}{d\phi d\alpha_{y,n}}, \frac{d^2 f_\mu}{d\phi d\alpha_{z,n}} \right) \frac{1}{\tilde{\sigma}_f^{p-1}} \left( \frac{df_\mu}{d\alpha_{x,n}}^2 + \frac{df_\mu}{d\alpha_{y,n}}^2 + \frac{df_\mu}{d\alpha_{z,n}}^2 \right)^{\frac{p}{2}-1} \left( \frac{df_\mu}{d\alpha_{x,n}}, \frac{df_\mu}{d\alpha_{y,n}}, \frac{df_\mu}{d\alpha_{z,n}} \right)^{\mathrm{T}}$$

$$= \sum_{n=1}^{N} \frac{d^2 f_\mu}{d\phi d\hat{\alpha}_n}(\mu_\alpha)\Delta\hat{\alpha}_n = \frac{d^2 f_\mu}{d\phi d\alpha}(\mu_\alpha)\Delta\alpha \approx \frac{1}{\varepsilon}\left[ \frac{df}{d\phi}(\mu_\alpha + \varepsilon\Delta\alpha) - \frac{df}{d\phi}(\mu_\alpha) \right],$$

$$\text{where } \alpha = (\hat{\alpha}_1^{\mathrm{T}}, \dots, \hat{\alpha}_N^{\mathrm{T}})^{\mathrm{T}} \text{ and } \widehat{\alpha_n} = \left( \alpha_{x,n}, \alpha_{y,n}, \alpha_{z,n} \right)^{\mathrm{T}}$$

$$\text{and } \Delta\hat{\alpha}_n = \frac{1}{\tilde{\sigma}_f^{p-1}} \left( \frac{df_\mu}{d\alpha_{x,n}}^2 + \frac{df_\mu}{d\alpha_{y,n}}^2 + \frac{df_\mu}{d\alpha_{z,n}}^2 \right)^{\frac{p}{2}-1} \left( \frac{df_\mu}{d\alpha_{x,n}}, \frac{df_\mu}{d\alpha_{y,n}}, \frac{df_\mu}{d\alpha_{z,n}} \right)^{\mathrm{T}}.$$

$$(16)$$

The scaling parameter $\varepsilon$ is chosen using a generalized finite difference step size as shown by Equation (17) below:

$$\hat{\varepsilon} = \varepsilon \max_i(|\Delta\alpha_i|) \tag{17}$$

to be applicable for different choices of $p$. According to an embodiment, the finite difference step size $\hat{\varepsilon}$ is generally chosen to be two orders of magnitude smaller than the characteristic element length. Generally, according to an embodiment, $\hat{\varepsilon}$ is chosen to be significantly smaller than the shortest element edge.

FIGs. 6A-D illustrate functionality, according to an embodiment, where a geometrical perturbation field $\Delta\alpha$ and sensitivities $d\tilde{\sigma}_f/d\phi$ given by Equation (16) of the geometrical uncertainty measure, with respect to an elemental topology design variable field, are visualized for an optimized structure.

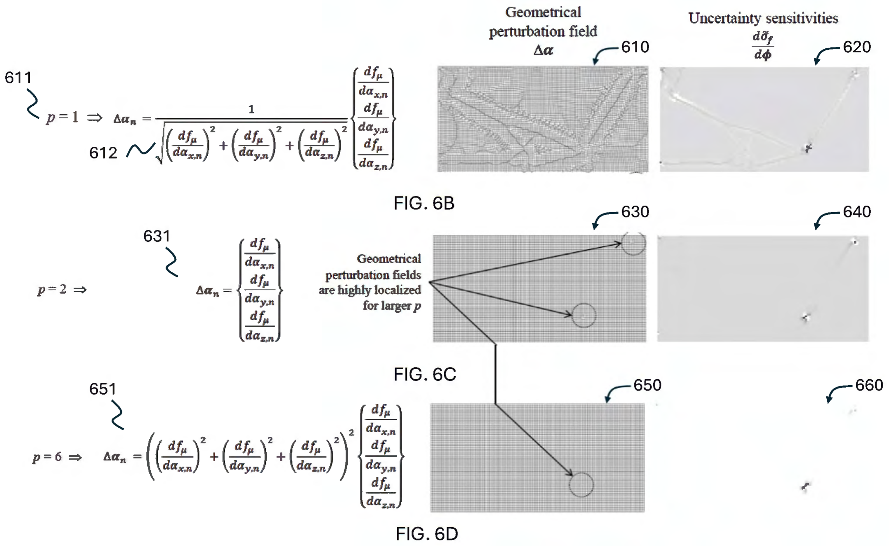

FIG. 6A illustrates a design space 601 (i.e., a space where an optimization algorithm may place material to optimize an objective, a design domain in which an optimized material layout is determined) of an inverter mechanism topology optimization model 602. FIG. 6B illustrates both a geometrical perturbation field $\Delta\alpha$ 610 (and associated mathematical description, given by the equation 611, of the perturbation field 610) and uncertainty sensitivities 620 $d\tilde{\sigma}_f/d\phi$ determined using the compliance force inverter benchmark model 602 and $p = 1$ in Equation 16. The compliance force inverter benchmark example inverts an input force, thereby yielding an output force in the opposite direction. Further, the compliance force inverter uses the elastic deformation for transmitting forces, as well as inverts the output force from compression to tension. The compliance force inverter is utilized as a benchmark example for illustrating embodiments because the compliant force inverter typically has unphysical compliant hinges for deterministic optimization approaches. FIG. 6C illustrates a geometrical perturbation field $\Delta\alpha$ 630 (and associated mathematical description, given by the equation 631, of the perturbation field 630) and uncertainty sensitivities 640 $d\tilde{\sigma}_f/d\phi$ determined using the model 602 and $p = 2$ in Equation 16. FIG. 6D illustrates a geometrical perturbation field 650 $\Delta\alpha$ (and associated mathematical description, given by the equation 651, of the perturbation field 650) and uncertainty sensitivities 660 $d\tilde{\sigma}_f/d\phi$ determined using the model 602 and $p = 6$ in Equation 16.

Generally, the proposed $L^p$-norm based uncertainty measure can have numerical challenges for $p = 1$ as well as $p \gg 1$. Thus, additional implementation details are provided hereinbelow in relation to Implementation Details for the $L^p$-norm Based Uncertainty Measure. Specifically, for $p = 1$ the denominator of the principal sensitivity perturbation might approximate zero yielding numerical overflows as visualized in the denominator 612 of the equation 611 of FIG. 6B. Thus, a threshold scheme is proposed hereinbelow in relation to Minimum Thresholding for Geometrical Uncertainty Measure Calculations and Corresponding Sensitivities. For large values of $p$ numerical overflows are prevented using a normalization as derived herein below in relation to normalization for $L^p$-norm Aggregation. Additionally, numerical regularization using filtering of the nodal gradients is proposed herein below in relation to Filtering of the Nodal Gradients to improve the convergence for the localized uncertainty measure using large values of $p$ as demonstrated herein below.

To practically model geometrical mesh uncertainty for shell element models, the uncertainty parametrization should be strictly in-plane as discussed herein in relation to In-Plane Projection. Additionally, the response with respect to the uncertainty parametrization for shell elements will not be fully linear. Thus, central finite differences may be applied instead of forward finite differences for the sensitivity calculation, as discussed herein below in relation to Finite Difference Approach Implementation.

Example Numerical Implementation

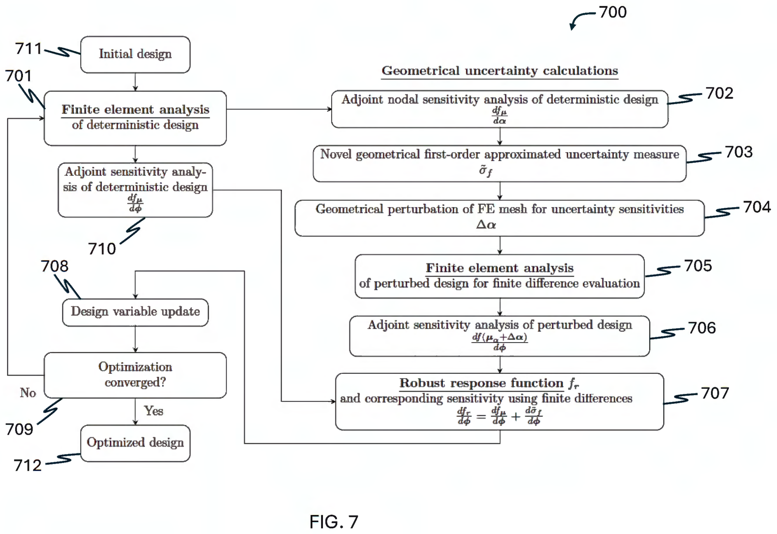

FIG. 7 shows a deterministic optimization workflow 700 that includes geometrical robustness (with respect to nodal geometrical uncertainty) in the optimization formulation using a semi-intrusive implementation.

The method 700 begins with an initial design 711 (e.g., obtaining a finite element model representing a real-world object being optimized). From there, a first finite element analysis is performed at step 701 of the deterministic design, i.e., performed on the mesh without taking into account any sensitivities. From the finite element analysis at step 701, the method 700 moves to step 710 and performs an adjoint sensitivity analysis of the deterministic design to determine the sensitivity of the deterministic design $\frac{df_\mu}{d\phi}$, which is used at step 707, as discussed below.

Also from step 701, the method 700 may move to step 702 and perform geometrical uncertainty calculations (steps 702-707. At step 702 an adjoint nodal sensitivity analysis of the deterministic design $\frac{df_\mu}{d\alpha}$ is performed. Following step 702, at step 703, the method 700 continues by determining a novel geometrical first-order approximated uncertainty measure $\widetilde{\sigma_f}$ using Equation (12). Thereafter, at step 704, geometrical perturbation of the finite element mesh for uncertainty sensitivities $\Delta\alpha$ is performed using Equation (16). Following step 704, at step 705, a finite element analysis is performed of the perturbed design by applying a first order finite difference approach. At step 706, the method 700 performs an adjoint sensitivity analysis of the perturbed design $\frac{df(\mu_\alpha+\Delta\alpha)}{d\phi}$. To continue, at step 707, a robust response function $f_r$ is performed using Equation (2) and the corresponding sensitivity of the response function is determined using the finite differences from Equation (16), $\frac{df_r}{d\phi} = \frac{df_\mu}{d\phi} + \frac{d\widetilde{\sigma}_f}{d\phi}$ and the sensitivity of the deterministic design determined at step 710. Thereafter, at step 708, the method 700 updates the design variable using the robust response function and the corresponding sensitivity as well as the constraint functions and corresponding sensitivities. At step 709, the design is evaluated to evaluate if a converged design has been determined. If the optimization converged, i.e., a "Yes" at step 709, the method determines the design is optimized and ends at step 712. Alternatively, if it is determined at step 709 that the design not converged, i.e., a "No" at step 709, the method 700 returns to step 701 and performs another finite element analysis of the deterministic design using the design as updated at step 708.

In the workflow 700, an additional adjoint system is solved (step 710) for the nodal gradients of the deterministic design and subsequently an additional finite element analysis is implemented for the geometrical perturbed mesh (step 705) to determine the robust response as well as the corresponding gradients with respect to the design variable.

According to an embodiment, the proposed numerical robustness method 700 may be implemented using software solutions, for example, from Dassault Systemes Americas Corp. For instance, in an embodiment, the optimization framework and mathematical programming may be implemented using the optimization tool Tosca® Structure [33], while the finite element solver for the primal solutions and adjoint sensitivities may be obtained using the structural solver Abaqus® [31] and both Tosca® Structure [33] and Abaqus® [31] may be utilized to implement the workflow 700. Additional calculations and interface modifications may be handled using Python scripts.

In an embodiment, Abaqus provides the nodal derivatives of the response with respect to the coordinate directions which are, by definition, the derivatives with respect to the geometrical random variables. The finite difference evaluations, e.g., step 705, are performed using additional Abaqus finite element analyses for the perturbed meshes. The robust response function $f_r$ and the corresponding sensitivities with respect to design variables are parsed, e.g., at step 707, into Tosca Structure where a Method of Moving Asymptotes [29] modifies the design variables in each optimization iteration.

Numerical Results for Mesh Robustness

Herein below, example implementations of embodiments are discussed and advantages of embodiments are illustrated.

Setting $p = 2$ is the same as calculating the standard deviation using the original FOSM method, as discussed herein above. Therefore, embodiments discussed below are initially applied to the L-shape example (*See,* FIG. 1 and FIGs. 8A-D, 9A-F, 10A-D, 11A-D and 12A-D) using $p = 2$ for completeness. Conversely, choosing the uncertainty characterization parameter $p = 1$ and $p > 2$ shows the full potential of embodiments and the uncertainty parametrization. Setting $p = 1$ significantly improves numerical robustness regarding numerical mesh uncertainty. On the other hand, as discussed herein below, large values of $p$ enhance the manufacturability of compliant hinges and show compliance optimized designs being comparable to stress-constrained optimized designs.

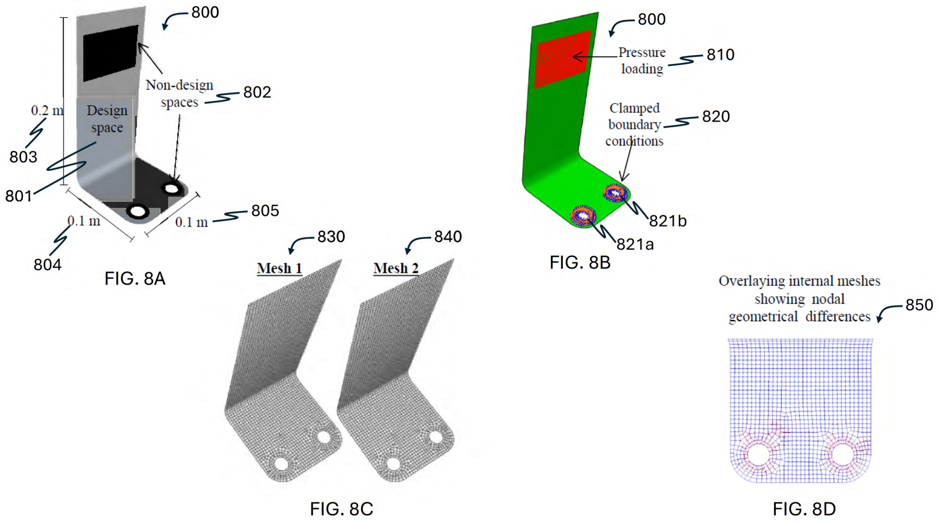

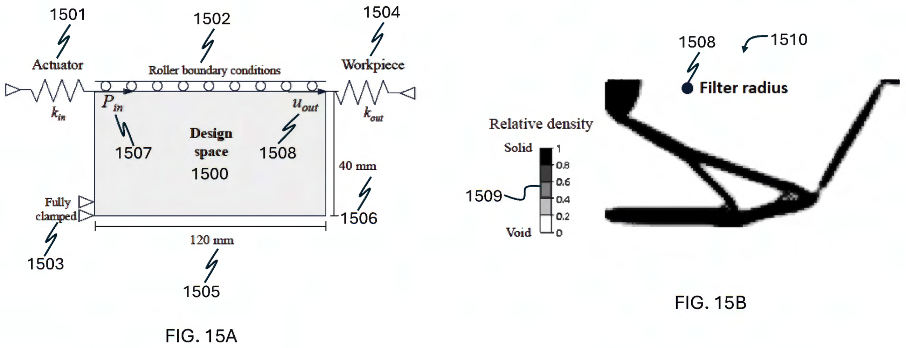

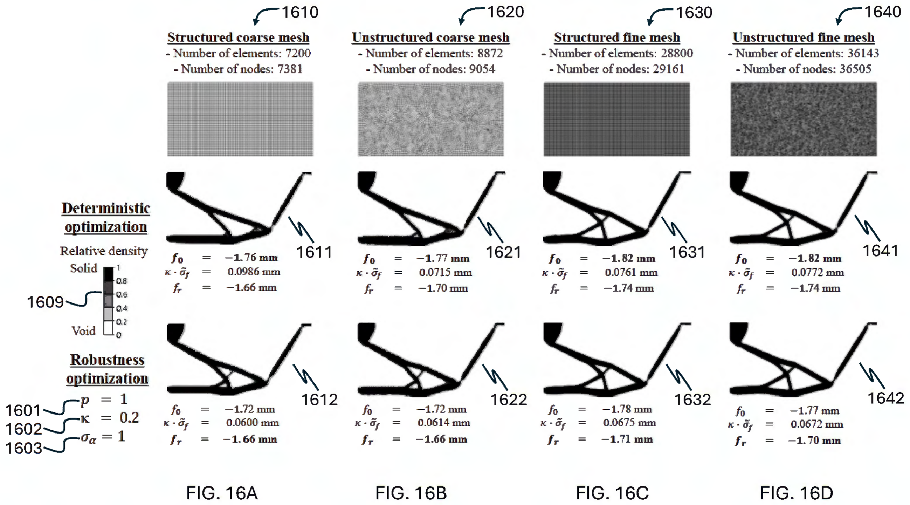

Initially, two examples showing numerical mesh-dependence having two very similar meshes are investigated. Specifically, an L-shaped bracket modeled using shell elements (*See* FIGs. 8A-D, 9A-F, 10A-D, 11A-D, and 12A-D) and a crane hook (*See* FIGs. 13A-D, 14A-D) as a 3D continuum model are discussed. Secondly, a compliant force inverter example (*See* FIGs. 15A-B and 16A-D) is analyzed to demonstrate mesh sensitivity across different mesh types and element sizes. Lastly, an aircraft bracket is investigated (*See* FIGs. 17A-B and 18A-D). This aircraft bracket case study offers insights into distinguishing between numerical and physical local minima.

. FIG. 8A shows an example L-shaped bracket model 800 having a design space 801 defined for a topology optimization and a sizing optimization, as well as non-design spaces 802. The material for the bracket 800 is modeled as a linear elastic isotropic material with a Possion's ratio of 0.3 and a Young's modulus of 147 GPa, and the filter radius is set to 3.88 mm. The L-shaped bracket 800 has a height 803 of 0.2 m, a length 804 of 0.1 m, and a width 805 of 0.1 m.

Referring now to FIG. 8B, for the optimization examples the bracket 800 is subject clamped at two holes 821a-b and loaded at the top through a pressure loading region 810. Further, in the optimization examples compliance for the given pressure load of 100 Pa (in the pressure loading region 810) and clamped boundary conditions 820 (at mounting holes 821a-b) are minimized as an objective function subject to a relative mass constraint of 50%. Referring to FIG. 8C, the bracket 800 (i.e., a CAD model of the bracket) is meshed twice yielding two different meshes 830 and 840. The mesh model 830 is meshed with 13 S3 (i.e., a three-node triangular shell element) three-node and 3275 S4 (i.e., a four-node quadrilateral shell element) four-node 3D shell elements having 3426 nodes, and the mesh model 840 is meshed with 19 S3 three-node and 3265 S4 four-node 3D shell elements having 3418 nodes. FIG. 8D illustrates an overlay 850 of the two meshes 830 and 840 for the bottom portion of the L-shaped bracket 800, showing nodal geometric differences between mesh 830 and mesh 840.

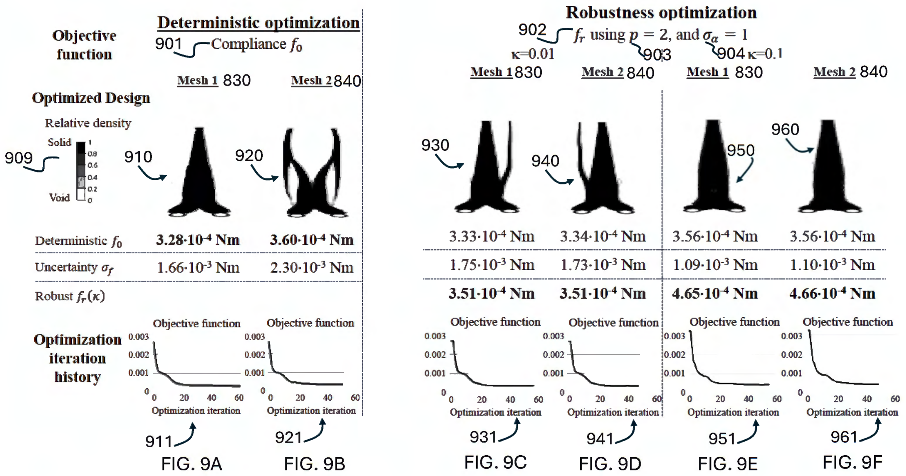

FIGs. 9A-F, 10A-D, 11A-D, and 12A-D, discussed herein below show results of optimizations performed using the meshes 830 and 840.

FIGs. 9A-9F illustrate topology optimization results determined using a sensitivity filter for the two mesh models 830 and 840 shown in FIG. 8C. FIGs. 9A and 9B show deterministic optimization results 910 and 920 determined using the meshes 830 and 840, respectively, where density is given by the scale 909. FIGs. 9A-F show robust optimization results 930, 940, 950, and 960, respectively, where density is given by the scale 909. The results 930 and 950 were determined using the mesh 830 while the results 950 and 960 were determined using the mesh 840. The deterministic designs 910 (FIG. 9A) and 920 (FIG. 9B) were determined using $f_0$ 901 as the objective function to be minimized. The robust designs 930 (FIG. 9C), 940 (FIG. 9D), 950 (FIG. 9E), and 960 (FIG. 9F) have $f_r$ as the objective function 902 to be minimized and utilized a $p$ 903 value of 2 and $\sigma_\alpha$ 904 value of 1. The objective function 902 to be minimized utilizes $\kappa = 0.01$ to obtain the results 930 and 940 and $\kappa = 0.001$ to obtain the results 950 and 960. For the results in FIGs. 9A-F the sensitivity filter radius is the same for the optimized designs 910 (FIG. 9A), 920 (FIG. 9B), 930 (FIG. 9C), 940 (FIG. 9D), 950 (FIG. 9E), and 960 (FIG. 9F). The deterministic optimization results 910 (FIG. 9A) and 920 (FIG. 9B), and the robust optimization results 930 (FIG. 9C), 940 (FIG. 9D), 950 (FIG. 9E), and 960 (FIG. 9F) apply the standard deviation ($p = 2$) 903 for $\sigma_\alpha = 1$ 904. In addition, FIGs. 9A-F show the optimization iteration histories of the objective functions in the plots 911, 921, 931, 941, 951, and 961, respectively, for designs 910, 920, 930, 940, 950, and 960, respectively.

The robust optimized designs 930 (FIG. 9C) and 940 (FIG. 9D) for $\kappa = 0.01$ have numerically identical optimized response functions, while the optimized designs 930 and 940 are mirrored about the center line. The robust optimized designs 930 (FIG. 9C), 940 (FIG. 9D), 950 (FIG. 9E) and 960 (FIG. 9F) have lower deterministic compliance $f_0$ than the deterministic optimized design 920 (FIG. 9B) even though the robust optimized designs 930, 940, 950, 960 are optimized for the robust compliance $f_r$ 902. However, the design 910 (FIG. 9A) remains the design with the lowest deterministic compliance $f_0$.

The robust optimized designs 950 (FIG. 9E) and 960 (FIG. 9F) have numerically the same deterministic response function as the deterministic optimized design in 920 (FIG. 9B). However, the optimized density distributions 950 and 960 are more similar to the deterministic optimized design 910.

In conclusion, the proposed nodewise uncorrelated uncertainty parametrization using the FOSM method (implementing embodiments and shown by results 930, 940, 950, 960) suppresses the likelihood of ending up in a mesh-induced local minimum (shown by results 920). However, the method, according to embodiments, also causes side effects that are investigated and characterized hereinbelow, using larger values for the aggregation parameter $p$. Thus, the robust optimized designs do not have the optimal deterministic response function value. The desired mesh-independence, isolated from the described side effects, is obtained using $p = 1$ and is hence applied in the following studies.

The proposed uncertainty measure using $p = 1$ is a sum of nodal standard deviations, where each standard deviation has the same weight and, as introduced above, satisfies mesh-independence.

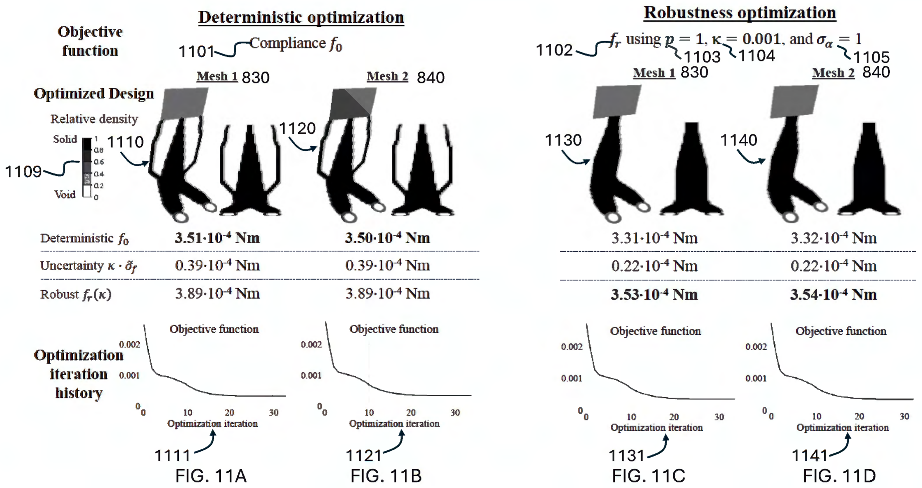

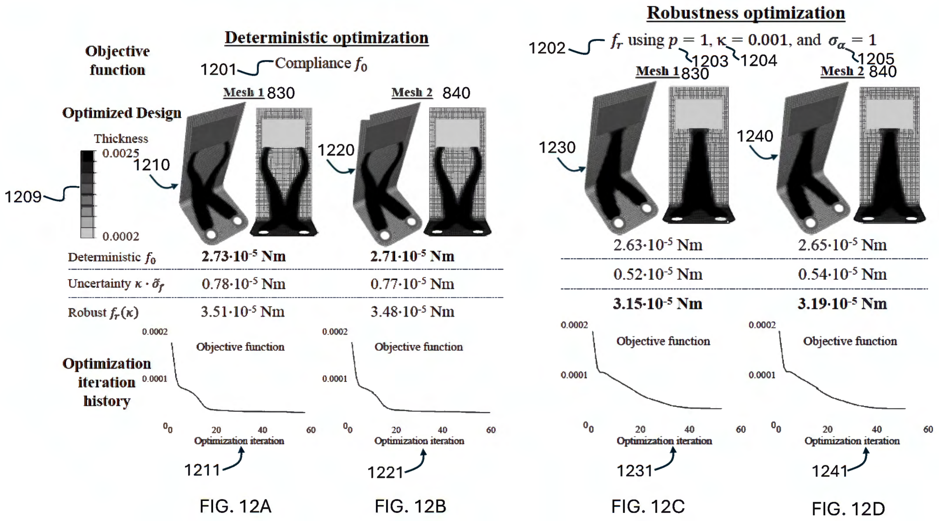

FIGs. 10A-D and 11A-D show topology-optimized designs and FIG. 12A-D shows thickness sizing optimized designs where the thickness of each shell element is a design variable. A sensitivity filter is applied for the topology optimization shown in FIGs. 10A-D and for the thickness sizing optimization shown in FIGs. 12A-D whereas a design variable filter is applied for the topology optimization in FIGs. 11A-D. Note, the filter radius for the design variable filter and for the sensitivity filter is the same for all 12 optimized designs shown in FIGs. 10A-D, 11A-D, and 12A-D.

FIGs. 10A-D illustrate topology optimization results determined using a sensitivity filter for the two mesh models 830 and 840 shown in FIG. 8C. FIGs. 10A and 10B show the deterministic optimization results 1010 and 1020 determined using the meshes 830 and 840, respectively, where relative density is given by the scale 1009. FIGs. 10C and 10D show robust optimization results 1030 and 1040, respectively, where relative density is given by scale 1009. Each of FIGs. 10A-D includes two representations/visualizations for each optimization result 1010, 1020, 1030, and 1040. Each representation is a view of the design from a particular perspective. The results 1010 and 1030 were determined using the mesh 830 while the results 1020 and 1040 were determined using the mesh 840. The deterministic designs 1010 (FIG. 10A) and 1020 (FIG. 10B) were determined using $f_0$ 1001 as the objective function to be minimized. The robust designs 1030 (FIG. 10C) and 1040 (FIG. 10D) have $f_r$ 1002 as the objective function to be minimized and utilized a $p$ 1003 value of 1, a $\kappa$ 1004 value of 0.001, and a $\sigma_\alpha$ 1005 value of 1 to obtain the results 1030 and 1040. For the results in FIGs. 10A-D the sensitivity filter radius is the same for the optimized designs 1010 (FIG. 10A), 1020 (FIG. 10B), 1030 (FIG. 10C), and 1040 (FIG. 10D). The deterministic optimization results 1010 (FIG. 10A) and 1020 (FIG. 10B), and the robust optimization results 1030 (FIG. 10C) and 1040 (FIG. 10D) apply the uncertainty measure ($p$ = 1) 1003 for $\sigma_\alpha$ = 1 1005. In addition, FIGs. 10A-D show the optimization iteration histories of the objective functions used to obtain the results 1010, 1020, 1030, and 1040 in the plots 1011, 1021, 1031, and 1041, respectively.

The topology optimization results 1010 (FIG. 10A), 1020 (FIG. 10B), 1030 (FIG. 10C), and 1040 (FIG. 10D in FIGs. 10A-D using the sensitivity filter show that, the two robust optimized designs 1030 (FIG. 10C) and 1040 (FIG. 10D) have numerically identical optimized designs. Thus, the robust topology optimization results 1030 (FIG. 10C) and 1040 (FIG. 10D) are numerical mesh-independent when the novel sum uncertainty for $p$ = 1 (1003) is included as numerical robustness in the optimization formulation. Additionally, comparing the plots 1031 and 1041 to the plots 1011 and 1021 shows that the robust optimization 1030 (FIG. 10C) and 1040 (FIG. 10D) using the sensitivity filter requires fewer optimization iterations than the deterministic optimizations 1010 (FIG. 10A) and 1020 (FIG. 10B).

FIGs. 11A-D illustrate topology optimization results determined using a design variable filter for the two mesh models 830 and 840 shown in FIG. 8C. FIGs. 11A and 11B show deterministic optimization results 1110 and 1120 determined using the meshes 830 and 840, respectively, where relative density is given by the scale 1109. FIGs. 11C and 11D show robust optimization results 1130 and 1140, respectively, where relative density is given by scale 1109. Each of FIGs. 11A-D include two representations/visualizations for each optimization result 1110, 1120, 1130, and 1140. Each representation is a view of the design from a particular perspective. The results 1110 and 1130 were determined using the mesh 830 while the results 1120 and 1140 were determined using the mesh 840. The deterministic designs 1110 (FIG. 11A) and 1120 (FIG. 11B) were determined using $f_0$ 1101 as the objective function to be minimized. The robust designs 1130 (FIG. 11C) and 1140 (FIG. 11D) have $f_r$ 1102 as the objective function to be minimized and utilized a $p$ 1103 value of 1, a $\kappa$ 1104 value of 0.001, and a $\sigma_\alpha$ 1105 value of 1 to obtain the results 1130 and 1140. For the results in FIGs. 11A-D the design variable filter radius is the same for the optimized designs 1110 (FIG. 11A), 1120 (FIG. 11B), 1130 (FIG. 11C), and 1140 (FIG. 11D). The deterministic optimization results 1110 (FIG. 11A) and 1120 (FIG. 11B), and the robust optimization results 1130 (FIG. 11C) and 1040 (FIG. 10D) apply the uncertainty approach for ($p$ = 1) 1103 for $\sigma_\alpha$ = 1 1105. In addition, FIGs. 11A-D show the optimization iteration histories of the objective functions used to obtain the results 1110, 1120, 1130, and 1140 in the plots 1111, 1121, 1131, and 1141, respectively.

The topology optimization shown in FIGs. 11A-D using the design variable filter show that the two deterministic optimized designs 1110 and 1120 and the two robust optimized designs 1130 and 1140 are similar, but the robust optimized designs 1130 and 1140 have a better structural performance.

FIGs. 12A-D illustrate thickness sizing optimization results determined using a sensitivity filter for the two mesh models 830 and 840 shown in FIG. 8C. FIGs. 12A and 12B show deterministic optimization results 1210 and 1220 determined using the meshes 830 and 840, respectively, where relative density is given by the scale 1209. FIGs. 12C and 12D show robust optimization results 1230 and 1240, respectively, where relative density is given by scale 1209. Each of FIGs. 12A-D includes two representations/visualizations for each optimization result 1210, 1220, 1230, and 1240. Each representation is a view of the design from a particular perspective. The results 1210 and 1230 were determined using the mesh 830 while the results 1220 and 1240 were determined using the mesh 840. The deterministic designs 1210 (FIG. 12A) and 1220 (FIG. 12B) were determined using $f_0$ 1201 as the objective function to be minimized. The robust designs 1230 (FIG. 12C) and 1240 (FIG. 12D) have $f_r$ 1202 as the objective function to be minimized and utilized a $p$ 1203 value of 1, a $\kappa$ 1204 value of 0.001, and a $\sigma_\alpha$ 1205 value of 1 to obtain the results 1230 and 1240. For the results in FIGs. 12A-D the sensitivity filter radius is the same for the optimized designs 1210 (FIG. 12A), 1220 (FIG. 12B), 1230 (FIG. 12C), and 1240 (FIG. 12D). The deterministic optimization results 1210 (FIG. 12A) and 1220 (FIG. 12B), and the robust optimization results 1230 (FIG. 12C) and 1240 (FIG. 12D) apply the uncertainty approach for ($p$ = 1) 1203 for $\sigma_\alpha$ = 1 1205. In addition, FIGs. 12A-D show the optimization iteration histories of the objective functions used to obtain the results 1210, 1220, 1230, and 1240 in the plots 1211, 1221, 1231, and 1241, respectively.

The thickness sizing optimization results shown in FIGs. 12A-D yield the same conclusions as the topology optimization using the design variable filter in FIGs. 11A-D. Thus, illustrating that the approach of embodiments works not only for topology optimization, but may also be generalized to composite layer thicknesses, composite layer angles, bead, shape, etc..

FIGs. 9A-F, 10A-D, and 11A-D show deterministic topology-optimized designs using the two meshes 830 and 840, and apply a sensitivity to a sensitivity filter and a design variable to a density filter for introducing a regularization to the optimization formulation. The deterministic optimized designs 910 and 920 in FIGs. 9A and 9B and 1010 and 1020 in FIGs.

10A-B for the sensitivity filter are mesh-dependent and at least the optimized solution for Mesh 2 840 is a local minimum, since the compliance is significantly larger than the compliance of the optimized design for Mesh 1 830. The deterministic optimized designs 1110 and 1120 in FIGs. 11A and 11B are mesh-independent. However, the appearance of the two arms and the optimized compliance values in contrast to the optimized solution using Mesh 1 830 in FIG. 9A suggests the optimized designs attain the same local minimum. FIGs. 12A and 12B show the deterministic thickness sizing optimized designs using the two different meshes. The optimized designs seem mesh-independent. However, the optimized designs consist of two arms similar to the local minimum obtained using topology optimization.

The robust optimized designs 1030 (FIG. 10C), 1040 (FIG. 10D), 1130 (FIG. 11C), 1140 (FIG. 11D), 1230 (FIG. 12C), and 1240 (FIG. 12D) also have lower deterministic compliance $f_0$ (1001, 1101, and 1201, respectively) than the deterministic optimized designs 1010 (FIG. 10A), 1020 (FIG. 10B), 1110 (FIG. 11A), and 1120 (FIG. 11B) even though the robust optimized designs are optimized for robust compliance $f_r$ (1002, 1102, and 1202, respectively) Thus, the novel sum uncertainty using $p = 1$ in the robust optimization formulation for the present applications suppresses the likelihood of ending up in a local minimum.

The deterministic optimization results and the robust optimization results show that the same conclusions are reached for topology optimization and thickness sizing optimization, showing that the present robust optimization formulation using the novel sum uncertainty for $p = 1$ is independent of the design variable type for non-parametric optimization (e.g., other design variables types could be nodal shape design variables, bead design variables, composite layered thickness, composite layered angles, etc.). Secondly, it can be observed that the robust optimization requires a similar number of optimization iterations as the deterministic optimization.

Crane Hook

FIGs. 13A-D illustrate an example of applying embodiments to a crane hook optimization where the crane hook is clamped at a top hole and loaded through distributed forces using two load cases. In this example, compliance is minimized subject to a volume constraint of 50%.

FIG. 13A illustrates a design space for a crane hook model 1300 in a topology optimization example. The crane hook model 1300 has design space 1301 and non-design spaces 1302a-b. The crane hook model 1300 has a height 1303 of 0.21 m, a length 1304 of 0.13 m, and a width 1305 of 0.04 m. The material of the crane hook 1300 is modeled as linear elastic isotropic material with a Poisson's ratio of 0.3 and a Young's modulus of 210 GPa and a filter radius is set to 9.73 mm.

FIG. 13B illustrates two meshes 1310 and 1320, respectively, of the crane hook model 1300 subject to two different load cases (e.g., distributed forces 1306a for mesh 1310 and distributed forces 1306b for mesh 1320). In the load case for the mesh 1310 the crane hook 1300 is subject to distributed forces 1306a ($15.43$ N/mm$^2$) and in the load case for the mesh 1320 the crane hook 1300 is subject to distributed forces 1306b ($11.23$ N/mm$^2$). In the example of FIGs. 12A-D, total compliance is minimized as an objective function subject to a relative mass constraint of 50%. In meshes 1310 and 1320 of FIG. 13B, the boundary conditions 1307 are located on the inner portion of the hole in the crane hook 1300 and are clamped.

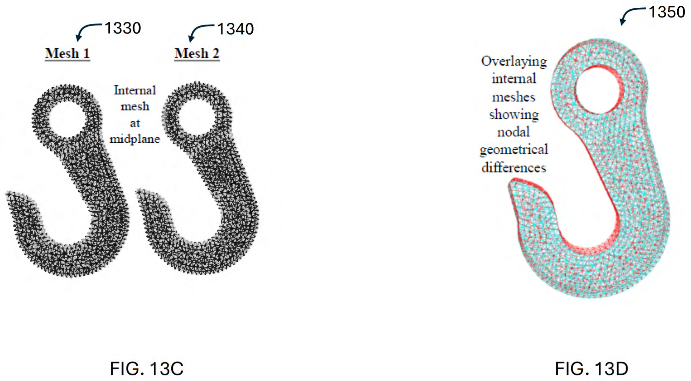

FIG. 13C illustrates mesh models 1330 and 1340 generated based on the model 1300. The mesh model 1330 (Mesh 1) is meshed by 22335 four-node tetrahedral 3D continuum elements (C3D4 [31]) having 6843 nodes, and the mesh model 1340 (Mesh 2) is meshed by 22212 four-node tetrahedral 3D continuum elements (C3D4 [31]) having 6810 nodes.

FIG. 13D illustrates a mesh comparison 1350 showing the two meshes 1330 and 1340 overlapping one another. This comparison 1350 illustrates that while the two meshes 1330 and 1340 are meshed for the same model 1300, and are rather similar, there are notable small differences between the two meshes.

FIGs. 14A-D illustrate topology optimization results determined using the two mesh models 1330 and 1340 shown in FIG. 13C. FIGs. 14A and 14B show deterministic optimization results 1410 and 1420, respectively. FIGs. 14C and 14D show robust optimization results 1430 and 1440, respectively. Each of FIGs. 14A-D include two representations/visualizations for each optimization result 1410, 1420, 1430, and 1440. Each representation is a view of the design from a particular perspective. The results 1410 and 1430 were determined using the mesh 1330 while the results 1420 and 1440 were determined using the mesh 1340. The deterministic designs 1410 (FIG. 14A) and 1420 (FIG. 14B) were determined using $f_0$ 1401 as the objective function to be minimized. The two deterministic optimized designs 1410 and 1420 have fundamentally different optimized material layouts in their designs, even though the differences in the two finite element meshes 1330 and 1340 are very similar, as illustrated in comparison 1350 of FIG. 13D. The robust designs 1430 (FIG. 14C) and 1440 (FIG. 14D) have $f_r$ 1402 as the objective function to be minimized and utilized a $p$ 1403 value of 1, a $\kappa$ 1404 value of 0.001, and a $\sigma_\alpha$ 1405 value of 1 to obtain the results 1430 and 1440. For the results in FIGs. 14A-D the sensitivity filter radius is the same for the optimized designs 1410 (FIG. 14A), 1420 (FIG. 14B), 1430 (FIG. 14C), and 1440 (FIG. 14D). The deterministic optimization results 1410 (FIG. 14A) and 1420 (FIG. 14B), and the robust optimization results 1430 (FIG. 14C) and 1440 (FIG. 14D) apply the uncertainty measure ($p = 1$) 1403 for $\sigma_\alpha = 1$ 1405. In addition, FIGs. 14A-D show the optimization iteration histories of the objective functions used to obtain the results 1410, 1420, 1430, and 1440 in the plots 1411, 1421, 1431, and 1441, respectively.

The robust designs 1430 (FIG. 14C) and 1440 (FIG. 14D) have numerically identical optimized material layouts 1430 and 1440 and also have a significantly lower deterministic compliance $f_0$ (3.98 Nm for 1430 and 3.96 Nm for 1440) than the two deterministic optimized designs 1410 and 1420 (4.28 Nm for 1410 and 4.38 Nm for 1420) even though the robust optimized designs 1430 and 1440 are optimized for the robust compliance $f_r$ 1402. Thus, the suppression of mesh-induced local minima and mesh-independence for the robust optimized designs are also shown for the given 3D continuum example.

The compliant force inverter introduced in [8] and FIGs. 6A-D, and used as a benchmark example in [7] is defined in FIGs. 15A-B, discussed below, and shows a deterministic optimized design, featuring a compliant hinge that has a concentrated lumped region consisting of intermediate density elements, which is not feasible for manufacturing.

FIGs. 15A-B illustrate a compliant topology optimization inverter mechanism benchmark example as defined in [8] and FIGs. 6A-D. A design variable filter is applied for all mechanism examples and the design variable filter radius 1508 is the same for all optimization formulations. FIG. 15A shows the modeling and design space 1500 (having a width 1505 of 120mm and a height 1506 of 40mm), as well as an actuator spring 1501, roller boundary conditions 1502, clamped boundary conditions 1503, and a workpiece 1504. In FIG. 15A, the finite element model for the mechanism design has an input actuator 1501 defined using a linear spring $k_{in}$ = 1 N/mm and a point load 1507 $P_{in}$ = 1 N. The objective function is to minimize the output displacement $u_{out}$ 1508 at the attachment point to the workpiece 1504 having the linear stiffness $k_{out}$ = 0.001 N/mm. By minimizing the output displacement 1508 as an objective function, an optimized inverter mechanism behavior is imposed. The design is subject to a relative mass constraint of 20%. The model for the design space 1500 consists of 7200 four-node continuum plane stress elements (CPS4 [31]) having 7381 nodes. The material is modeled as linear elastic isotropic material with a Poisson's ratio of 0.3 and a Young's modulus of 1 MPa, and the filter radius is set to 2.5 mm. FIG. 15B, shows the deterministic optimized design 1510, forming a hinge consisting of intermediate density elements being much smaller than the defined filter radius 1508, while the relative density is shown by scale 1509.

In FIG. 15A, nodal uncertainty contributions at the edges of the initial design space 1500 are not included in the calculation of the geometrical uncertainty to avoid singularity uncertainty contributions from the nodal boundary conditions and loading. Note, the design variable filter is applied, and the design variable filter radius is the same for all present optimized mechanism designs.

FIGs. 16A-D show a topology optimized mechanism using four different meshes (FIGs. 16A-D, respectively), for the model defined in FIGs. 15A-B. FIG. 16A shows structured coarse mesh 1610, comprising 7200 elements and 7381 nodes, as well as a deterministic optimization result 1611 and a robustness optimization result 1612. FIG. 16B shows unstructured coarse mesh 1620 comprising 8872 elements and 9054 nodes, as well as deterministic optimization result 1621 and robustness optimization result 1622. FIG. 16C shows structured fine mesh 1630 comprising 28800 elements and 29161 nodes, as well as deterministic optimization result 1631 and robustness optimization result 1632. FIG. 16D shows unstructured fine mesh 1640 comprising 36143 elements and 36505 nodes, as well as deterministic optimization result 1641 and robustness optimization result 1642. In FIGs. 16A-D relative density is shown by scale 1609. For the robustness optimization in FIGs. 16A-D, a $p$ 1601 value of 1, a $\kappa$ 1602 value of 0.2, and a $\sigma_{\alpha}$ 1603 value of 1 were utilized to obtain the results 1612, 1622, 1632 and 1642. Two designs are determined for each mesh 1610, 1620, 1630, and 1640, specifically, a deterministic optimized mechanism design 1611 (FIG. 16A), 1621 (FIG. 16B), 1631 (FIG. 16C), and 1641 (FIG. 16D), and a robust optimized mechanism design 1612 (FIG. 16A), 1622 (FIG. 16B), 1632 (FIG. 16C), and 1642 (FIG. 16D). The design variable filter is applied, and the filter radius (1508, FIG. 15B) is the same for all eight optimized designs (1611, 1612, 1621, 1622, 1631, 1632, 1641, 1642). The numerical results show that the four robust optimized mechanisms 1612 (FIG. 16A), 1622 (FIG. 16B), 1632 (FIG. 16C), and 1642 (FIG. 16D) are similar in material layout and independent of their respective mesh (1610, 1620, 1630, and 1640). The deterministic optimized mechanisms 1611 (FIG. 16A) and 1621 (FIG. 16B) for the two coarse meshes 1610 (FIG. 16A) and 1620 (FIG. 16B) are significantly different. The robust optimized designs 1612 and 1622 for the two coarse meshes 1610 (FIG. 16A) and 1620 (FIG. 16B) are slightly different. The two deterministic optimized designs 1611 and 1621 for the two coarse meshes 1610 (FIG. 16A), 1620 (FIG. 16B) are fundamentally different from the two deterministic optimized designs 1631 and 1641 for the two fine meshes 1630 (FIG. 16C), and 1640 (FIG. 16D). Moreover, the two deterministic optimized designs 1631 and 1641 for the fine meshes 1630 (FIG. 16C), 1640 (FIG. 16D) are rather similar to all four designs 1612 (FIG. 16A), 1622 (FIG. 16B), 1632 (FIG. 16C), and 1642 (FIG. 16D) being robustly optimized. These results indicate that the robust optimization, including uncertainty for the geometrical uncorrelated nodal distributions in the optimization formulation, ensures a robust mechanism independent of acceptable changes in the finite element mesh and is thereby mesh-independent.

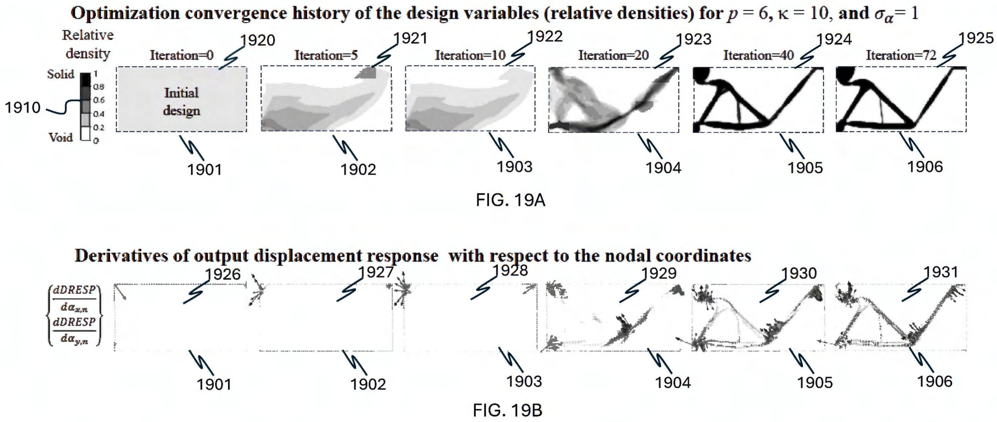

From the values of the deterministic response, it cannot be concluded that the obtained mesh-independent design is optimal in general or optimal for a specific mesh. This is due to length scale effects at the compliant hinges. No significant visual differences in the hinge design between the deterministic optimized mechanisms (1611, 1621, 1631, 1641) and the robust optimized mechanisms (1612, 1622, 1632, 1642) using $p$ = 1 are observed. However, the compliance response is highly sensitive to even tiny differences in the geometric layout at the compliant hinge. Therfore, the impact of the present method on the compliant hinges is further disucssed hereinbelow, in relation to the compliance force inverter example discussed in relation to FIGS. 19A-B, 20A-C, and 21A-B, using larger values for the aggregation parameter $p$.

Aircraft Bracket

FIG. 17A illustrates an aircraft bracket example using an aircraft bracket model 1700 that is loaded at a top hole using four load cases and clamped at the bottom through eight bolt connections as shown in FIG. 17A. In this example, compliance is minimized subject to a volume constraint of 12.5% including non-design areas around the top and bottom holes.

FIGs. 17A-B show the design space and mesh, as well as the deterministic optimized designs, respectively, for an aircraft bracket used in a topology optimization. Specifically, FIG. 17A shows the design space 1701, load conditions 1702a-d, boundary conditions 1703a-d, and non-design spaces 1704a-e of the model 1700. The boundary conditions 1703a-d are clamped at connection elements representing the bolt stiffness at all eight holes (four of which are shown in FIG. 17A) of the aircraft backet. The total compliance of the four load 1702a-d cases (LC1 (1702a) =11.27 kN, LC2 (1702b) =11.27 kN, LC3 (1702c) =6.44 kN, and LC4 (1702d) =6.44 kN) is minimized as the objective function subject to a relative mass constraint of 12.5%. The model 1700 is meshed using 448897 tetrahedral 3D continuum elements (C3D4 [31]) having 83481 nodes. The material is modeled as linear elastic isotropic material with a Poisson's ratio of 0.33 and a Young's modulus of 68 GPa, and the filter radius is set to 1.3 times the characteristic element length. FIG. 17B shows the deterministic optimized designs 1710 and 1720 using a move limit of the density design variable per optimization iteration of 0.10 (1710) and 0.25 (1720).

The deterministic optimized design is highly dependent on specific parameters of the optimization algorithm. Only the so-called move limit of the Method of Moving Asymptotes [29] is varied where the move limit restricts the maximum allowable change of the design variable per optimization iteration. FIG. 17B shows the deterministic optimized designs 1710 and 1720 using a move limit of 0.10 (1710) and 0.25 (1720), respectively. The optimized aircraft bracket designs are visualized using an iso-cut value of 0.3. The two deterministic designs 1710 and 1720 are fundamentally different while having the same total compliance values. Note, the compliance for the different load cases is fundamentally different for both deterministic optimized designs.

Generally, to achieve numerical mesh-independence for the aforementioned examples, $\kappa$ is chosen so that the weighted uncertainty measure is much smaller than the deterministic response value. However, suppression of local minima is not observed when choosing $\kappa$ such that the weighted uncertainty measure has values similar to the deterministic compliance values of the optimized designs. Therefore, a numerical study is conducted and discussed in relation to FIG. 18 using larger values for the weighting parameter $\kappa$.

FIG. 18 shows deterministic optimization results 1710 and 1720 from FIG. 17B along with robust topology optimization results 1801-1808, for the deterministic topology optimization illustrated in FIG. 17B, determining using different values for the weighting factor $\kappa$. The deterministic designs 1710 and 1720 were determined using $f_0$ 1730 being the compliance value. It can be observed from the deterministic optimization results 1710 and 1720 $\kappa = 0$ yields the deterministic optimized designs and the different move limits of 0.10 (1710) and 0.25 (1720) are applied, respectively. Moreover, the additional second deterministic $f_0$ 1813a-b is the optimized compliance for a deterministic optimization using each robust optimized design as the initial density distribution to prove the existence of a local minima. Even though the compliance improves for the second deterministic $f_0$ 1813a-b in comparison to the deterministic $f_0$ 1810a-b, which is expected due to the relaxation of the objective function ($\kappa = 0$), visually almost no difference is observable in the designs for the deterministic response $f_0$ 1810a-b from the designs for the second deterministic $f_0$ 1813a-b. Hence, the deter mistic optimized designs for the second deterministic $f_0$ 1813a-b are not depicted.

FIG. 18 also shows the robust eight optimized designs 1801-1808 for two sets of move limit values (i.e., a move limit of 0.10 for 1801-1804 and a move limit of 0.25 for 1805-1808) and different $\kappa$ values (where $\kappa = 0.4$ for 1801 and 1805, $\kappa = 1$ for 1802 and 1806, $\kappa = 2$ for 1803 and 1807, and $\kappa = 3$ for 1804 and 1808). FIG.18 also shows the deterministic compliance $f_0$ 1810a-b, uncertainty $\bar{\sigma}_f$ 1811a-b, robust compliance $f_r(\kappa)$ 1812a-b, and derterminstic complinace $f_0$ using optimized design as initial $\Phi$ 1813a-b.

All optimized designs 1710, 1720, and 1801-1808 in FIG. 18 are significantly different from their counterparts (i.e., designs having either the same move limit value or the same $\kappa$ value, for example, design 1801 is a counterpart to 1802, 1803, 1804 and 1805). All robust optimized designs in FIG. 18 for the applied move limit of 0.10 (1801, 1802, 1803, and 1804) have higher deterministic compliance values 1801a compared to the deterministic optimized designs 1710 and 1720.

Applying the robust optimized designs 1801-1808 as initial density distribution for a deterministic optimization yields optimized designs very similar to each applied initial density distribution. Additionally, the corresponding deterministic compliance values $f_0$ 1810a-b in FIG. 18 are very similar for the different density distributions. Therefore, it can be concluded that all obtained designs 1710, 1720, and 1801-1808 are local minima for a very flat region of the deterministic compliance.

Secondly, it can be concluded that the proposed method is not generally able to suppress local minima for the present application. The present differences are most likely caused by physical local minima, and cannot be addressed using the present robustness approach. However, the deterministic optimized design in FIGs. 17A-B and FIG. 18 obtained using a move limit of 0.25 (i.e., 1720) are mesh induced local minimum. The best optimized design using the proposed method occurs at $\kappa = 0.1$ (not shown) and differs significantly from the deterministic design. Furthermore, increasing $\kappa$, as shown in FIG. 18, leads to the suppression of small design features and slightly more symmetric optimized designs are obtained for only very minor increases in the compliance values.

Numerical Results for Physical Robustness

Discussed hereinbelow is the influence of using larger values for the aggregation parameter (uncertainty characterization parameter) $p$. The results discussed hereinbelow provide an understanding of the intended numerical mesh-independence for $p = 1$ (i.e., the uncertainty characterization parameter being below a threshold) and the standard deviation for $p = 2$ (i.e., the uncertainty characterization parameter being above a threshold). Two additional studies are enhanced hinge designing for the compliant mechanism shown hereinbelow and compliance optimization hereinbelow yielding designs similar to stress-constraint designs. The $L^p$-norm approximates the $L^\infty$-norm for large values of $p$. Hence, only the nodes having the largest geometrical standard deviations influence the optimized designs.

Single-node hinges and stress singularities can be viewed as inadequacies of the numerical modeling. However, they are also classified as physical robustness since the optimized designs are very sensitive regarding their physical realization and manufacturing at sudden locations for the designs.

Compliance Force Inverter

The discussion above concludes that the proposed method affects the hinge design due to large nodal standard deviations at the so-called compliant hinges. Therefore, the same example is investigated using larger values for the aggregation parameter p, which thereby yields a very localized uncertainty measure at the compliant hinges.

FIG. 19A shows visualizations 1920-1925, over the iterations 1901-1906 (corresponding iterations 0, 5, 10, 20, 40, and 72, respectively) for the design variables (relative densities) using the novel uncertainty for $p = 6$, $\kappa = 10$, and $\sigma_\alpha = 1$ for the output displacement $u_{out}$ as the objective function to be minimized, where the objective function $f_r$ is minimized. Relative density in the visualizations 1920-1925 is shown by scale 1910. The visualizations 1926-1931 in FIG. 19B show the vector(s) of the nodal standard deviations, which is the magnitude of $\dfrac{d_f}{d\hat{a}_n}$ for optimization iteration 0 (1901), 5 (1902), 10 (1903), 20 (1904), 40 (1905), and 72 (1906), respectively. FIG. 19B shows that the uncertainty measure $\tilde{\sigma}_f$ changes significantly during the optimization iterations 0 (1901), 5 (1902), 10 (1903), 20 (1904), 40 (1905), and 72 (1906). The locations of the nodal standard deviations contributing the most to the overall $\tilde{\sigma}_f$, change their locations fundamentally during the optimization iterations 0 (1901), 5 (1902), 10 (1903), 20 (1904), 40 (1905), and 72 (1906). FIG. 19B also shows that the largest nodal standard deviations for the last optimization iterations 20 (1904), 40 (1905), and 72 (1906) are located at the so-called compliant hinges. Thus, the proposed method considering uncorrelated nodal random distributions is an alternative approach to design compliant hinges in topology optimization for compliant mechanisms.

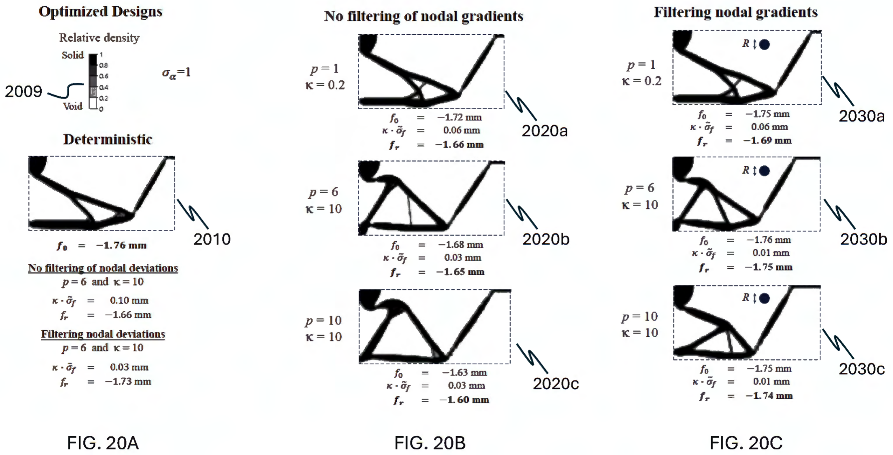

FIGs. 20A-C show the topology optimization result of the model 1510 defined above in relation to FIGs. 15A and 15B. Specifically, FIG. 20A shows the result 2010 for a deterministic optimization, FIG. 20B shows the results 2020a-c for a robust optimization with no filtering of nodal gradients, and FIG. 20C shows the results 2030a-c for a robust optimization with filtering of nodal gradients using the radius R. Relative density in the results 2010, 2020a-c, and 2030a-c is shown by scale 2009. Robust optimized designs are obtained for: (i) $p = 1$, $\kappa = 0.2$, and $\sigma_\alpha = 1$ (2020a and 2030a), (ii) $p = 6$, $\kappa = 10$, and $\sigma_\alpha = 1$ (2020b and 2030b), and (iii) $p = 10$, $\kappa = 10$, and $\sigma_\alpha = 1$ (2020c and 2030c). A design variable filter was applied and the corresponding design variable filter radius is the same for the optimized designs 2010, 2020a-c, and 2030a-c.

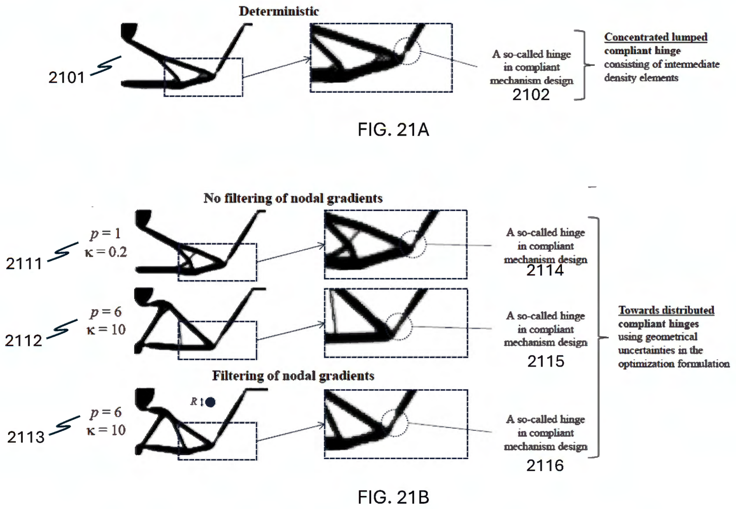

The optimization results in FIGs. 20A-C and 21A-B show the influence of the parameters for the geometrical uncertainty approach on the so-called hinges in compliant mechanism design. These hinges are what causes the inverter mechanisms to be "compliant" designs, as the hinge has a highly localized bending. However, some of these compliant mechanism designs have better designs for the hinges of the compliant mechanism (e.g., when robustness is included) than others, as the deformations are not highly localized as in the deterministic designs. For example, as illustrated in FIG. 21A, the compliant mechanism design 2101 having a concentrated lumped region 2102 represents a "poor" design; as illustrated in FIG 21B: the compliant mechanism design 2111 having a concentrated lumped region 2114 represents an "improved" design; the compliant mechanism design 2112 having an absence of a concentrated lumped region at the hinge 2115 represents a "good" design; and the compliant mechanism design 2113 having an absence of a concentrated lumped region at the hinge 2116 represents a "good" design. A "good" hinge may represent a hinge that is manufacturable and physically modeled correctly, whereas a bad hinge may have intermediate densities or single node connections that represent poor modeling and are not manufacturable. Both a "good" hinge and a "poor" hinge may contain local deformations, however for a "good" hinge these deformations be spread about more elements than for a "poor" hinge.

FIG. 21A shows a deterministic optimized compliant hinge mechanism design 2101 consisting of a concentrated lumped region 2102 having intermediate density elements. Several procedures (e.g., [7] and [6]) indirectly suppress the concentrated lumped regions with intermediate density elements to mimic a compliant hinge 2102 (which is a zoomed in visualization of the hinge mechanism design 2101). FIG. 21B shows the robust optimized designs for (p = 1, $\kappa$ = 0.2, $\sigma_\alpha$ = 1 (2111)), ($p$ = 6, $\kappa$ = 10, $\sigma_\alpha$ = 1(2112)) and (p = 10, $\kappa$ = 10, $\sigma_\alpha$ = 1 (2113)), illustrating an embodiment's approach for uncertainties using geometrical uncorrelated nodal distributions by introducing a method that pushes the material layout for the optimized mechanism designs towards distributed compliant hinges 2114, 2115, and 2116, which are zoomed in visualizations of the designs 2111, 2112, and 2113, respectively. This approach for uncertainties using geometrical nodal uncorrelated distributions introduces a method that pushes the optimized mechanism designs towards distributed compliant hinges, improving feasibility for manufacturing.

Moreover, the robust optimized designs 2111-2113 in FIG. 21B also show that applying a higher exponent, e.g., *p* = 6 (designs 2112 and 2213) or including filtering of the nodal gradients (design 2113) enforces a larger distribution of compliant hinges compared to applying the lower exponent, e.g., *p* = 1 and no filtering of the nodal gradients (design 2111).

Consequently, the robust optimization formulation using the uncertainty measure for geometrically uncorrelated nodal distributions can also be applied to constructively impact the physical design so that the physical designing is less sensitive to very localized geometrical distributions, e.g., for manufacturing considerations. Thus, a geometrical robust design with respect to the most sensitive locations for manufacturing is obtained.

Norwegian Sock

FIGs. 22A-C show an L-shaped beam example, also referred to as a Norwegian sock. FIG. 22A shows a design space 2200 for a L-shaped beam 2210, with a loading 2201 of *f* = 1.5 kN, and boundary conditions 2202 for the L-shaped beam 2210. The L-shaped beam 2210 has a left side length *L* 2203 (where *L* is 0.2m), with a relative width of the top portion 2204 being $\frac{2L}{5}$, a relative length of the bottom region 2205 being 5*L*, and a relative right side 2206 length of $\frac{2L}{5}$. The material is modeled as linear elastic isotropic material with a Poisson's ratio of 0.33, a Young's modulus of 71 MPa, and a density of 1 kg/m$^3$. The depth of the L-shaped 2210 beam is 1mm, and the filter radius is set to 2.6mm. FIG. 22B shows a mesh model 2220 for the design space 2220 consisting of 6400 four-node continuum plane stress elements (CPS4 [31]) and 6601 nodes. Due to the stress singularity at the inner corner, the L-shape beam 2210 is frequently studied in topology optimization literature. FIG. 22C shows deterministic optimized designs 2230 and 2240 for mass minimization $f_{0-mass}$ 2231 subject to a stress constraint $f_{1-stress}$ 2232 of 600 Mpa, and a compliance minimization $f_{0-compliance}$ 2241 subject to a mass constraint $f_{1-mass}$ 2242 having the same mass as the mass of the stress-constrained optimized design 2230. In FIG. 22C, relative density is shown by scale 2209. The two optimized designs 2230 and 2240 differ significantly since the compliance-minimized design 2240 has a stress singularity 2243 at the inner corner.

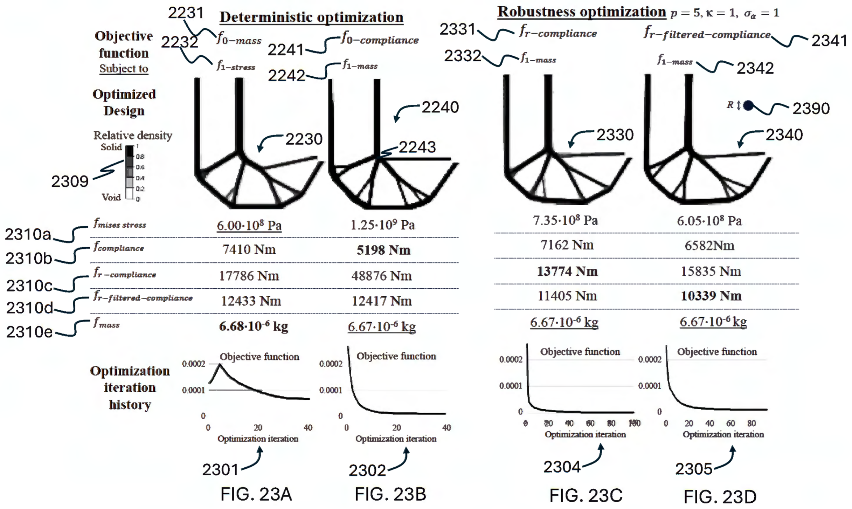

FIGs. 23A-23D illustrate topology optimization results for the L-beam model 2210 defined above in relation to FIGs. 22A-C. FIG. 23A shows the deterministic optimized design 2230 from FIG. 22C for a mass minimization $f_{0-mass}$ 2231 subject to a stress constraint $f_{1-stress}$ 2232. FIG. 23B shows the deterministic optimized design 2240 from FIG. 22C for a compliance minimization $f_{0-compliance}$ 2241 subject to a mass constraint $f_{1-mass}$ 2242. FIG. 23C shows a robust optimized design 2330 for a compliance minimization $f_{r-compliance}$ 2331 subject to a mass constraint $f_{1-mass}$ 2332. FIG. 23D shows a robust optimized design 2340 for a filtered compliance minimization $f_{r-filtered-compliance}$ 2341 subject to a mass constraint $f_{1-mass}$ 2342. Design 2340 of FIG. 23D was determined through filtering nodal gradients (i.e., nodal uncertainties) with the filter radius R 2309 and using the standard deviation for $p$ = 5, $\kappa$ = 1, $\sigma_\alpha$ = 1. Optimized designs 2230, 2240, 2330, and 2340 have a move limit of 0.1 per optimization iteration imposed on the normalized density variable. In FIGs. 23A-23D, relative density is shown by scale 2309. In addition, FIGs. 23A-23D show $f_{misses\ stress}$ 2310a, $f_{compliance}$ 2310b, $f_{r-compliance}$ 2310c, $f_{r-filtered-compliance}$ 2310d, and $f_{mass}$ 2310e for designs 2230, 2240, 2330, and 2340. In addition, FIGs. 23A-23D show the optimization iteration histories of the objective functions used to obtain the results 2230, 2240, 2330, and 2340 in the plots 2301, 2302, 2304, and 2305, respectively.

As expected, the compliance optimized design 2240 in FIG. 23B has a lower compliance value $f_{compliance}$ 2310b than optimized design 2240 at the cost of having a two times larger stress value $f_{misses\ stress}$ 23 10a. In contrast, the robust compliance-optimized designs 2330 and 2340 in FIGs. 23C-D, respectively, using *p* = 5, $\kappa$ = 1, $\sigma_\alpha$ = 1 with (2340) and without (2330) filtering of the nodal gradients are more similar to the stress-constrained optimized designs 2230 than to the deterministic compliance optimized designs 2240, and do not contain the inner sharp corner 2243 causing the high stress singularity for the two robust compliance optimized designs 2330 and 2340. Additionally, the stress response values 2310a are significantly reduced for the two robust compliance optimized designs 2330 and 2340. The robust optimized design 2340 illustrates that where the nodal gradients are filtered, as characterized by the filter radius R 2390, numerically the stress response 2310a and the mass 2310e have the same values as for the stress-constrained design 2230 in FIG. 23A.

It can be concluded that an embodiment using large values of the uncertainty characterization parameter *p* implicitly minimizes the stress peaks at the cost of a slightly larger deterministic compliance. However, choosing the

weighting factor $\kappa$ is not straightforward when a specific threshold for the stresses should be fulfilled. Additionally, the filtering of the nodal gradients improves the convergence in comparison to the unfiltered robust optimization. Though, the robust stiffness optimized designs require about twice as many optimization iterations as the deterministic optimized solutions compared to both the stiffness and the strength optimization.

Parameter Values for Geometrical Uncertainty Scheme

Embodiments may utilize the following numerical values for the parameters $\kappa$ in Equation (2) and $\hat{\varepsilon}$ in Equation (17):

- $\kappa = 0.1 \cdot \dfrac{\mu_f}{\tilde{\sigma}_f}$ of the design of the initial optimization iteration (for $p$ = 1 and $\sigma_\alpha$ = 1)
- $\hat{\varepsilon}$ = characteristicelementlength $\cdot$ 10$^{-2}$

Example Implementation Details for $L^p$-norm-based Geometrical Uncertainty Measure

Described hereinbelow are additional implementation details for an example robustness method.

Minimum Thresholding for Geometrical Uncertainty Measure Calculation and Corresponding Sensitivities

The geometrical perturbation field $\Delta$ in Equation (16) for $p$ = 1 has numerical issues when $\left\|\dfrac{df_\mu}{d\hat{\alpha}_n}\right\|_2$ approximates zero as the denominator (as shown in FIG. 6B) approaches zero (division by numerical zero) and the geometrical perturbation field vector $\Delta\alpha$ will then have large numerical values. Therefore, a threshold scheme is applied, in an embodiment, to suppress the division by numerical zero for determining the uncertainty measure $\tilde{\sigma}_f$ and the corresponding sensitivities. Initially, the threshold scheme determines the maximum nodal standard deviation over all nodal contributions. Afterward, only the nodal standard deviations having a value higher than a certain fraction $\beta$ of the maximum nodal standard deviation are included in determining the uncertainty measure $\tilde{\sigma}_f$ and the geometrical perturbation field $\Delta\alpha$ as given by Equation (18) below:

$$\sigma_{f,n} = \begin{cases} \sigma_{f,n}, & \text{if } \sigma_{f,n} \geq \beta \cdot \max_i(\sigma_{f,i}) \\ 0, & \text{otherwise} \end{cases} \qquad (18)$$

The threshold parameter $\beta$ is set to 0.01 in all present studies and is only applied for shell models when optimizing using the aggregation parameter $p$ = 1. Numerical studies show that the values for the geometrical uncertainty measure $\tilde{\sigma}_f$ hardly change compared to not applying the threshold scheme.

Normalization for $L^p$-norm aggregation

A normalization of aggregated nodal standard deviations is implemented in an embodiment to prevent numerical overflows in a numerical implementation which utilizes large values of $p$ for the aggregation function, e.g., values of 5 or larger. In such an example, the largest value of the nodal standard deviation $\sigma_{max}$ is used to normalize the terms being penalized by the power of $p$ yielding Equation (19) below:

$$\tilde{\sigma} = \sigma_{max} \left( \sum_{n=1}^{N} \left( \frac{\sigma_{f,n}}{\sigma_{max}} \right)^p \right)^{\frac{1}{p}}, \text{where } \sigma_{max} = \max_i(\sigma_{f,i}) \qquad (19)$$

Thereby, the corresponding geometrical perturbation $\Delta\hat{\alpha}_n$ for the gradient calculation is given by Equation (20) below:

$$\Delta\hat{\alpha}_n = \frac{1}{\left( \sum_{n=1}^{N} \left( \frac{\sigma_{f,n}}{\sigma_{max}} \right)^p \right)^{\frac{p-1}{p}}} \left( \frac{\sigma_{f,n}}{\sigma_{max}} \right)^{p-2} \frac{\left( \frac{df_\mu}{d\alpha_{x,n}}, \frac{df_\mu}{d\alpha_{y,n}}, \frac{df_\mu}{d\alpha_{z,n}} \right)^{\mathrm{T}}}{\sigma_{max}} \qquad (20)$$

Filtering of Nodal Gradients

A linear filter can be applied on the nodal gradient $df/d\alpha$ for additional regularization. Classical filtering allows for cancellation causing additional local minima since the entries of the nodal gradient are not strictly positive. Hence, nodal filtering can be applied, according to an embodiment, as a scaling of the magnitude of the nodal gradient $df/d_n$, while maintaining the direction of the gradient. This nodal filtering can begiven by Equation (21) below:

$$\frac{\bar{d}f}{d\hat{\alpha}_n} = \frac{1}{\sum_{i=1}^{N} H_i} \sum_{i=1}^{N} H_i \left|\frac{df}{d\hat{\alpha}_i}\right|_2 \frac{\frac{df}{d\hat{\alpha}_n}}{\left|\frac{df}{d\hat{\alpha}_n}\right|_2} \qquad (21)$$

where the weighting function $H_i$ is given by the linear decaying cone shape function and defined by Equation (22) below:

$$H_i = \begin{pmatrix} \frac{R-r_i}{R}, & \text{if } r_i < R \\ 0, & \text{otherwise} \end{pmatrix} \qquad (22)$$

where $R$ is the filter radius and $r_i = \|\hat{\alpha}_i - \hat{\alpha}_n\|_2$ is the distance between any pair of nodes.

For $p = 1$, the filtering of nodal gradients has no practical effect other than a linear scaling of the uncertainty measure as the gradient direction is not affected since only the direction of $\frac{df_\mu}{d\alpha}$ is applied as perturbation for the gradient computation. Hence, according to an embodiment, nodal filtering of gradients is applied for $p > 1$ and yields improved convergence toward a solid-void design.

Example Implementation Details for Shell Models

Described herein below is an application of an example embodiment to shell models

In-Plane Projection

When applying the present geometrical uncertainty measure to shell elements, nodal gradients $df_\mu/d\hat{\alpha}_n$ are projected onto the plane of the shell element using each nodal normal direction n, as indicated by Equation (23) below:

$$\frac{df_\mu}{d\hat{\alpha}}_{in-plane} = \frac{df_\mu}{d} - T\frac{df_\mu}{d\hat{\alpha}}n \qquad (23)$$

The projection has the same effect as directly defining the random variables using a coordinate system strictly defined in the plane of the shell element. Thus, the underlying mesh uncertainty is modeled more precisely with respect to typical procedures applied for the shell mesh generation.

Example Finite Difference Approach Implementation

The sensitivity in Equation (16) can be seen as a forward (or backward) numerical finite difference sensitivity approach; see [34]. Thus, the numerical sensitivity equation can also be modified to a central finite difference approach [34] as shown by Equation (24) below:

$$\frac{d\tilde{\sigma}_f}{d\phi} = \frac{d^2 f}{d\phi d\alpha}(\mu_\alpha)\Delta\alpha \approx \frac{1}{2\varepsilon}\left[\frac{df}{d\phi}(\mu_\alpha + \varepsilon\Delta\alpha) - \frac{df}{d\phi}(\mu_\alpha - \varepsilon\Delta\alpha)\right] \qquad (24)$$

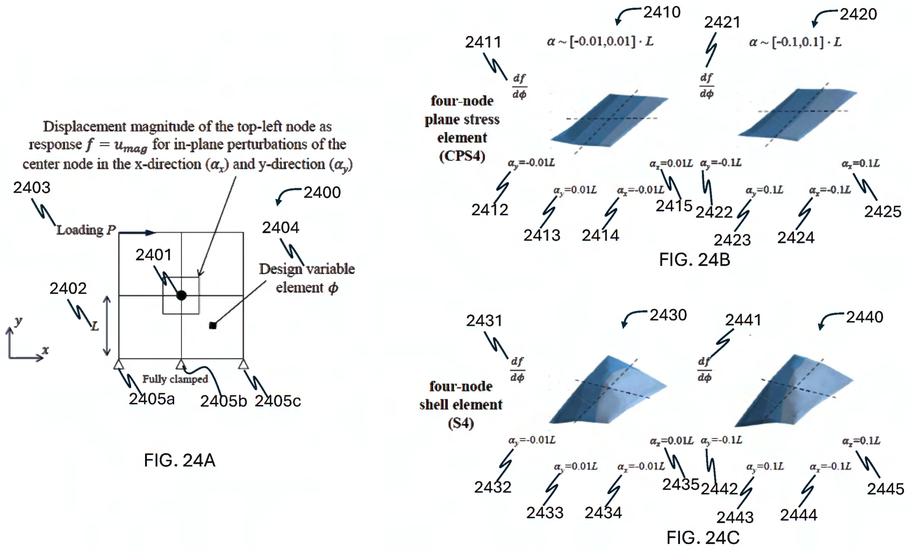

Generally, the central finite difference approach is numerically more accurate in sensitivity calculations than the forward (or backward) finite difference approach, but the central finite difference approach has twice the computational cost than the forward (or backward) finite difference approach. Therefore, the finite difference approach for the sensitivities is specifically examined in FIGs. 24A-C below, using four 2D plane stress continuum elements (CPS4 [31]) and four 3D shell elements (S4 [31]), respectively.

FIG. 24A shows representation 2400 of variations of the sensitivity $\frac{df}{d\phi}$ for the geometrical perturbations $\alpha_x$ and

$\alpha_y$ in the x-direction and y-direction, respectively, of the center node 2401 representing the geometrical perturbation field $\Delta_\alpha$. In FIG. 24A $L$ 2402 represents element length, $P$ 2403 represents loading, and $\phi$ 2404 represents a design variable element. Boundary conditions 2405a-c are fully clamped.

FIG. 24B shows variations 2410 and 2420, respectively. For the variation 2410 of FIG. 24B, $\alpha \sim [-0.01, 0.01] \cdot L$ for the sensitivity $\dfrac{df}{d\phi}$ 2411 the geometrical perturbations $\alpha_x$ 2414 and 2415, and $\alpha_y$ 2412 and 2413 using the four-node plane stress element (CPS4 [31]) are shown. For the variation 2420, $\alpha \sim [-0.1, 0.1] \cdot L$ for the sensitivity $\dfrac{df}{d\phi}$ 2421 the geometrical perturbations $\alpha_x$ 2424 and 2425, and $\alpha_y$ 2422 and 2423 using the four-node plane stress element (CPS4 [31]) are shown. FIG. 24C shows the variations 2430 and 2440, respectively. For the variation 2430 of FIG. 24C, $\alpha \sim [-0.01, 0.01] \cdot L$ for the sensitivity $\dfrac{df}{d\phi}$ 2431 the geometrical perturbations $\alpha_x$ 2434 and 2435, and $\alpha_y$ 2432 and 2433 using a four node shell element (S4 [31]) are shown. For the variation 2440, $\alpha \sim [-0.1, 0.1] \cdot L$ for the sensitivity $\dfrac{df}{d\phi}$ 2441 the geometrical perturbations $\alpha_x$ 2444 and 2445, and $\alpha_y$ 2442 and 2443 using the four-node plane stress element (S4 [31]) are shown.

The results 2410 and 2420 in FIG. 24B show that the forward (or backward) finite difference approach is sufficient for the 2D continuum element model as the results are linear at 0 for all directions, whereas the results 2430 and 2440 in FIG. 24C show a kink at 0 (change in the slopes at 0, but still linear after 0 for all directions) demonstrating that the computationally more expensive central finite difference approach is best for the 3D shell element model.

Several numerical experiments verified that for element types, e.g., all element types, having only translational degrees of freedom (e.g., 2D or 3D continuum elements) then the forward finite difference approach is sufficient for element types (e.g., all element types) having both translational and rotational degrees of freedom (e.g., shell and beam elements) then the central finite difference approach should be applied.

Exemplary Advantages Of Embodiments

Embodiments present a novel isotropic geometrical uncertainty measure based on the $L^p$-norm aggregation of the nodal uncorrelated standard deviations. For $p = 1$, the uncertainty measure is mesh-independent and effectively suppresses mesh-induced local minima for optimized designs. For higher values of the uncertainty characterization parameter, p, the method diminishes the impact of localized geometric variations, resembling the characteristics of stress-constrained optimized designs and contributing constructively to enforcing a desired length scale for hinge designing in compliant mechanisms. A semi-intrusive and computationally efficient first-order principal sensitivity approach is implemented to compute the required sensitivities of the geometrical uncertainty measure which only utilizes one additional finite element analysis per optimization iteration for continuum models and two additional finite element analyses per optimization iteration for shell models.

Note, the selected numerical examples, featuring symmetric design domains, straightforward loading configurations, and linear finite element models, are intentionally chosen due to their demonstrated susceptibility to mesh-induced local minima. While the proposed method proves effective in these scenarios, embodiments may be used in relation to any real-world object/design.

Computer Support

FIG. 25 is a schematic view of a computer network in which embodiments may be implemented. Client computer(s)/devices 50 and server computer(s) 60 provide processing, storage, and input/output (I/O) devices executing application programs and the like. Client computer(s)/device(s) 50 can also be linked through communications network 70 to other computing devices, including other client device(s)/processor(s) 50 and server computer(s) 60. The communications network 70 can be part of a remote access network, a global network (*e.g.,* the Internet), cloud computing servers or service, a worldwide collection of computers, local area or wide area networks, and gateways that currently use respective protocols (*e.g.*, TCP/IP, Bluetooth®, etc.) to communicate with one another. Other electronic device/computer network architectures are also suitable.

FIG. 26 is a block diagram illustrating an example embodiment of a computer node (*e.g.*, client processor(s)/device(s) 50 or server computer(s) 60) in the computer network 70 of FIG. 25. Each computer node 50, 60 contains system bus 79, where a bus is a set of hardware lines used for data transfer among components of a computer or processing system. The system bus 79 is essentially a shared conduit that connects different elements of a computer system (*e.g.*, processor, disk storage, memory, I/O ports, network ports, etc.) that enables transfer of information between the elements. Attached to the system bus 79 is an I/O devices interface 82 for connecting various input and output devices (*e.g.*,

keyboard, mouse, display(s), printer(s), speaker(s), etc.) to the computer node 50, 60. A network interface 86 allows the computer node to connect to various other devices attached to a network (*e.g.*, the network 70 of FIG. 25). A memory 90 provides volatile storage for computer software instructions 92a and data 94a used to implement an embodiment of the present disclosure (*e.g.,* the method 200 of FIG. 2). A disk storage 95 provides non-volatile storage for the computer software instructions 92b and data 94b used to implement an embodiment of the present disclosure. A central processor unit 84 is also attached to the system bus 79 and provides for execution of computer instructions.

In one embodiment, the processor routines 92a-92b and data 94a-94b are a computer program product (generally referenced as 92), including a non-transitory, computer readable medium (*e.g.*, a removable storage medium such as DVD-ROM(s), CD-ROM(s), diskette(s), tape(s), etc.) that provides at least a portion of the software instructions for the disclosed system. The computer program product 92 can be installed by any suitable software installation procedure, as is well known in the art. In another embodiment, at least a portion of the software instructions may also be downloaded over a cable, communication, and/or wireless connection. In other embodiments, the disclosure programs are a computer program propagated signal product embodied on a propagated signal on a propagation medium (*e.g.*, a radio wave, an infrared wave, a laser wave, a sound wave, or an electrical wave propagated over a global network such as the Internet, or other network(s)). Such carrier medium or signals provide at least a portion of the software instructions for the present disclosure routines/program 92.

In alternative embodiments, the propagated signal is an analog carrier wave or digital signal carried on the propagated medium. For example, the propagated signal may be a digitized signal propagated over a global network (*e.g.*, the Internet), a telecommunications network, or other networks (such as the network 70 of FIG. 25). In one embodiment, the propagated signal is a signal that is transmitted over the propagation medium over a period of time, such as the instructions for a software application sent in packets over a network over a period of milliseconds, seconds, minutes, or longer. In another embodiment, the computer readable medium of the computer program product 92 is a propagation medium that the computer system 50 may receive and read, such as by receiving the propagation medium and identifying a propagated signal embodied in the propagation medium, as described above for computer program propagated signal product.

Generally speaking, the term "carrier medium" or transient carrier encompasses the foregoing transient signals, propagated signals, propagated medium, storage medium, and the like.

In other embodiments, the program product 92 may be implemented as a so-called Software as a Service (SaaS), or other installation or communication supporting end-users.

Embodiments or aspects thereof may be implemented in the form of hardware including but not limited to hardware circuitry, firmware, or software. If implemented in software, the software may be stored on any non-transient computer readable medium that is configured to enable a processor to load the software or subsets of instructions thereof. The processor then executes the instructions and is configured to operate or cause an apparatus to operate in a manner as described herein.

Further, hardware, firmware, software, routines, or instructions may be described herein as performing certain actions and/or functions of the data processors. However, it should be appreciated that such descriptions contained herein are merely for convenience and that such actions in fact result from computing devices, processors, controllers, or other devices executing the firmware, software, routines, instructions, etc.

It should be understood that the flow diagrams, block diagrams, and network diagrams may include more or fewer elements, be arranged differently, or be represented differently. But it further should be understood that certain implementations may dictate the block and network diagrams and the number of block and network diagrams illustrating the execution of the embodiments be implemented in a particular way.

Accordingly, further embodiments may also be implemented in a variety of computer architectures, physical, virtual, cloud computers, and/or some combination thereof, and, thus, the data processors described herein are intended for purposes of illustration only and not as a limitation of the embodiments.

The teachings of all patents, published applications and references cited herein are incorporated by reference in their entirety.

While example embodiments have been particularly shown and described, it will be understood by those skilled in the art that various changes in form and details may be made therein without departing from the scope of the embodiments encompassed by the appended claims.

For example, the foregoing description and details of embodiments in the figures reference Applicant-Assignee (Dassault Systemes Americas Corp) and Dassault Systemes SE, tools, and platforms, for purposes of illustration and not limitation. Other similar tools and platforms are suitable.

REFERENCES

[1] O. Sigmund, J. Petersson, Numerical instabilities in topology optimization: A survey on procedures dealing with checkerboards, mesh-dependencies and local minima, Structural optimization 16 (1) (1998) 68-75. doi: 10.1007/BF01214002. URL https://doi.org/10.1007/BF01214002

[2] I. P. A. Papadopoulos, P. E. Farrell, T. M. Surowiec, Computing Multiple Solutions of Topology Optimization Problems, SIAM Journal on Scientific Computing 43 (3) (2021) A1555-A1582. doi:10.1137/20M1326209. URL https://epubs.siam.org/doi/10.1137/20M1326209

[3] C. Talischi, G. H. Paulino, A. Pereira, I. F. M. Menezes, Polygonal finite elements for topology optimization: A unifying paradigm, International Journal for Numerical Methods in Engineering 82 (6) (2010) 671-698. doi:10.1002/nme.2763. URL https://onlinelibrary.wiley.com/doi/10.1002/nme.2763

[4] P. Antonietti, M. Bruggi, S. Scacchi, M. Verani, On the virtual element method for topology optimization on polygonal meshes: A numerical study, Computers & Mathematics with Applications 74 (5) (2017) 1091-1109. doi:10.1016/j.camwa.2017.05.025. URL https://linkinghub.elsevier.com/retrieve/pii/S0898122117303309

[5] O. Sigmund, K. Maute, Topology optimization approaches: A comparative review, Structural and Multidisciplinary Optimization 48 (6) (2013) 1031-1055. doi:10.1007/s00158-013-0978-6. URL http://link.springer.com/article/10.1007/s00158-013-0978-6

[6] B. S. Lazarov, F. Wang, O. Sigmund, Length scale and manufacturability in density-based topology optimization, Archive of Applied Mechanics 86 (1) (2016) 189-218. doi:10.1007/s00419-015-1106-4. URL https://doi.org/10.1007/s00419-015-1106-4

[7] O. Sigmund, Morphology-based black and white filters for topology optimization, Structural and Multidisciplinary Optimization 33 (4-5) (2007) 401-424. doi:10.1007/s00158-006-0087-x. URL https://link.springer.com/article/10.1007/s00158-006-0087-x

[8] O. Sigmund, On the Design of Compliant Mechanisms Using Topology Optimization, Mechanics of Structures and Machines 25 (4) (1997) 493-524, publisher: Taylor & Francis eprint: https://doi.org/10.1080/08905459708945415. doi:10.1080/08905459708945415. URL https://doi.org/10.1080/08905459708945415

[9] A. D. Kiureghian, O. Ditlevsen, Aleatory or epistemic? Does it matter?, Structural Safety 31 (2) (2009) 105-112. doi:10.1016/j.strusafe.2008.06.020. URL https://www.sciencedirect.com/science/article/pii/S0167473008000556

[10] K. Steltner, B. Kriegesmann, C. B. W. Pedersen, Robust sizing optimization of stiffened panels subject to geometric imperfections using fully nonlinear post buckling analyses, Thin-Walled Structures 175 (2022) 109195. doi:10.1016/j.tws.2022.109195. URL https://www.sciencedirect.com/science/article/pii/S0263823122001719

[11] A. Haldar, S. Mahadevan, Probability, Reliability and Statistical Methods in Engineering Design, 1st Edition, John Wiley & Sons, New York ; Chichester England, 1999.

[12] M. Schevenels, B. S. Lazarov, O. Sigmund, Robust topology optimization accounting for spatially varying manufacturing errors, Computer Methods in Applied Mechanics and Engineering 200 (49-52) (2011) 3613-3627. doi:10.1016/j.cma.2011.08.006. URL http://www.sciencedirect.com/science/article/pii/S0045782511002611

[13] B. Sudret, S. Marelli, J. Wiart, Surrogate models for uncertainty quantification: An overview, in: 2017 11th European Conference on Antennas and Propagation (EUCAP), 2017, pp. 793-797, iSSN: null. doi:10.23919/Eu-CAP2017.7928679.

[14] I. Doltsinis, Z. Kang, Robust design of structures using optimization methods, Computer Methods in Applied Mechanics and Engineering 193 (23) (2004) 2221-2237. doi:10.1016/j.cma.2003.12.055. URL http://www.sciencedirect.com/science/article/pii/S0045782504000787

[15] I. Doltsinis, Z. Kang, G. Cheng, Robust design of non-linear structures using optimization methods, Computer Methods in Applied Mechanics and Engineering 194 (12) (2005) 1779-1795. doi:10.1016/j.cma.2004.02.027. URL http://www.sciencedirect.com/science/article/pii/S0045782504004165

[16] B. S. Lazarov, M. Schevenels, O. Sigmund, Topology optimization with geometric uncertainties by perturbation techniques, International Journal for Numerical Methods in Engineering 90 (11) (2012) 1321-1336. doi:10.1002/nme.3361.

[17] M. Kranz, J. K. L"udeker, B. Kriegesmann, A generalized approach for robust topology optimization using the first-order second-moment method for arbitrary response functions, Structural and Multidisciplinary Optimization 66 (5) (2023) 98. doi:10.1007/s00158-023-03540-w. URL https://doi.org/10.1007/s00158-023-03540-w

[18] M. Jansen, G. Lombaert, M. Schevenels, Robust topology optimization of structures with imperfect geometry based on geometric nonlinear analysis, Computer Methods in Applied Mechanics and Engineering 285 (2015) 452-467. doi:10.1016/j.cma.2014.11.028. URL http://www.sciencedirect.com/science/article/pii/S004578251400454X

[19] J. C. Kr"uger, B. Kriegesmann, Efficient Robust Topology Optimization of Eigenfrequencies Using the First- Order Second-Moment Method, in: K. Nachbagauer, A. Held (Eds.), Optimal Design and Control of Multi-body Systems, IUTAM Bookseries, Springer Nature Switzerland, Cham, 2024, pp. 75-84. doi:10.1007/ 978-3-031-50000-8_7.

[20] K. Steltner, C. B. W. Pedersen, B. Kriegesmann, Semi-intrusive approach for stiffness and strength topology optimization under uncertainty, Optimization and Engineering (Sep. 2022). doi:10.1007/s11081-022-09770-z. URL https://doi.org/10.1007/s11081-022-09770-z

[21] J. C. Krüuger, M. Kranz, T. Schmidt, R. Seifried, B. Kriegesmann, An efficient and non-intrusive approach for robust design optimization with the first-order second-moment method, Computer Methods in Applied Mechanics and Engineering 414 (2023) 116136. doi:10.1016/j.cma.2023.116136. URL https://linkinghub.elsevier.com/retrieve/pii/S00457825 23002608

[22] I. Ben-Yelun, A. O. Yuksel, F. Cirak, Robust topology optimization of lattice structures with spatially correlated uncertainties, Structural and Multidisciplinary Optimization 67 (2) (2024) 16. doi:10.1007/s00158-023-03716-4. URL https://link.springer.com/10.1007/s00158-023-03716-4

[23] M. Jansen, G. Lombaert, M. Diehl, B. S. Lazarov, O. Sigmund, M. Schevenels, Robust topology optimization accounting for misplacement of material, Structural and Multidisciplinary Optimization 47 (3) (2013) 317-333. doi:10.1007/s00158-012-0835-z. URL https://doi.org/10.1007/s00158-012-0835-z

[24] J. K. Guest, T. Igusa, Structural optimization under uncertain loads and nodal locations, Computer Methods in Applied Mechanics and Engineering 198 (1) (2008) 116-124. doi:10.1016/j.cma.2008.04.009. URL http://www.sciencedirect.com/science/article/pii/S004578250800159X

[25] B. Sudret, A. Der Kiureghian, Stochastic finite element methods and reliability: a state-of-the-art report, Tech. Rep. UCB/SEMM-2000/08, Department of Civil and Environmental Engineering, University of California Berkeley, Berkeley, California (2000).

[26] M. P. Bendsøe, Optimal shape design as a material distribution problem, Structural optimization 1 (4) (1989) 193-202. doi:10.1007/BF01650949. URL https://link.springer.com/article/10.1007/BF01650949

[27] O. Sigmund, K. Maute, Sensitivity filtering from a continuum mechanics perspective, Structural and Multidisciplinary Optimization 46 (4) (2012) 471-475. doi:10.1007/s00158-012-0814-4. URL https://doi.org/10.1007/s00158-012-0814-4

[28] K. Svanberg, H. Sv"ard, Density filters for topology optimization based on the Pythagorean means, Structural and Multidisciplinary Optimization 48 (5) (2013) 859-875. doi:10.1007/s00158-013-0938-1. URL http://link.springer.com/10.1007/s00158-013-0938-1

[29] K. Svanberg, The method of moving asymptotes - a new method for structural optimization, International Journal for Numerical Methods in Engineering 24 (2) (1987) 359-373. doi:10.1002/nme.1620240207. URL http://onlinelibrary.wiley.com/doi/10.1002/nme. 1620240207 /abstract

[30] B. Kriegesmann, J. K. L"udeker, Robust compliance topology optimization using the first-order second- moment method, Structural and Multidisciplinary Optimization 60 (1) (2019) 269-286. doi:10.1007/s00158-019-02216-8. URL https://doi.org/10.1007/s00158-019-02216-8

[31] Simulia, Abaqus, Dassault Systemes, 2024.

[32] Y. Kanno, On three concepts in robust design optimization: absolute robustness, relative robustness, and less variance, Structural and Multidisciplinary Optimization 62 (2) (2020) 979-1000. doi:10.1007/s00158-020-02503-9. URL https://doi.org/10.1007/s00158-020-02503-9

[33] Simulia, Tosca Structure, Dassault Systemes, 2024.

[34] D. A. Tortorelli, P. Michaleris, Design sensitivity analysis: Overview and review, Inverse Problems in Engineering 1 (1) (1994) 71-105. doi:10.1080/174159794088027573. URL https://www.tandfonline.com/doi/full/10.1080/174159794088027573

## Claims

1. A computer-implemented method comprising, by a processor:

   receiving, in memory of the processor, a mesh based model representing a real-world object, the mesh based model comprising a plurality of nodes;
   performing a simulation of the real-world object using the mesh based model received, wherein results of performing the simulation include (i) one or more behaviors of the real-world object and (ii) sensitivity of a value of one or more properties at each node, of a subset of the plurality of nodes, with respect to a geometrical coordinate of the node;
   for each node of the subset of the plurality of nodes: determining geometrical uncorrelated uncertainty for the node based on the sensitivity of the value of the one or more properties at the node and a deviation in the geometrical coordinate of the node;
   determining uncertainty in the one or more behaviors of the real-world object, wherein the uncertainty in the one or more behaviors of the real-world object is determined using a summed aggregation function of the geometrical uncorrelated uncertainty determined for each node of the subset and an uncertainty characterization parameter; and

outputting (i) an indication of the one or more behaviors of the real-world object and (ii) an indication of the determined uncertainty in the one or more behaviors of the real-world object.

2.  The computer-implemented method of Claim 1, further comprising:
    receiving an indication of a value of the uncertainty characterization parameter.

3.  The computer-implemented method of Claim 1 or Claim 2, wherein:
    responsive to the uncertainty characterization parameter being above a threshold, the indication of the determined uncertainty includes an indication of contribution by one or more nodes, of the subset of the plurality of nodes, to the determined uncertainty.

4.  The computer-implemented method of Claim 3, wherein the indication of contribution includes an indication of at least one of: magnitude and location.

5.  The computer-implemented method of any one of Claims 1 to 4, wherein:
    responsive to the uncertainty characterization parameter being below a threshold, the indication of the determined uncertainty is free from an indication of contribution to the determined uncertainty.

6.  The computer-implemented method of any one of Claims 1 to 5, wherein determining the uncertainty in the one or more behaviors of the real-world object comprises:

    determining a regularized geometrical uncorrelated uncertainty for two or more nodes of the subset of the plurality of nodes as a function of a weighted average of the geometrical uncorrelated uncertainty determined for each of the two or more nodes; and
    determining the uncertainty in the one or more behaviors of the real-world object using (i) the summed aggregation function of the geometrical uncorrelated uncertainty determined for each node of the subset, (ii) the uncertainty characterization parameter, and (iii) the regularized geometrical uncorrelated uncertainty determined.

7.  The computer-implemented method of any one of Claims 1 to 6, wherein the one or more behaviors of the real-world object include at least one of: a stress, a strain, a force, a displacement, a velocity, an acceleration, an eigenfrequency, a temperature, and a flux.

8.  The computer-implemented method of any one of Claims 1 to 7, further comprising:
    defining a design response of the real-world object as an objective function, wherein the design response is based on the determined uncertainty in the one or more behaviors of the real-world object and the one or more behaviors of the real-world object.

9.  The computer-implemented method of Claim 8, further comprising defining an optimization problem as a function of the design response defined and at least one constraint.

10. The computer-implemented method of Claim 9, further comprising:
    iteratively modifying at least one design variable in the mesh based model representing the real-world object and executing the performing the simulation, the determining geometrical uncorrelated uncertainty, and the determining uncertainty in the one or more behaviors of the real-world object using the mesh based model with the modified at least one design variable, until the optimization problem is satisfied.

11. The computer-implemented method of any one of Claims 1 to 10, wherein, for a given node of the subset of the plurality of nodes, the sensitivity of a value of one or more properties at the given node with respect to a geometrical coordinate of the given node is a magnitude of a vector.

12. The computer-implemented method of any one of Claims 1 to 11, wherein the determined uncertainty is at least one of an aleatoric uncertainty and an epistemic uncertainty.

13. A computer-program comprising instructions which, when the program is executed by a computer, cause the computer to carry out the computer-implemented method of any one of Claims 1 to 12.

14. A computer-based system comprising:

a processor; and
a memory having recorded thereon the computer-program of Claim 13.

15. A non-transitory computer readable medium, the computer readable medium comprising the computer-program of Claim 13.

FIG. 1A

FIG. 1B

EP 4 726 597 A1

200

Receive, in memory of a processor, a mesh based model representing a real-world object, the mesh based model including a plurality of nodes

201

Perform a simulation of the real-world object using the mesh based model received, wherein results of performing the simulation include (i) one or more behaviors of the real-world object and (ii) sensitivity of a value of one or more properties at each node, of a subset of the plurality of nodes, with respect to a geometrical coordinate of the node

202

For each node of the subset of the plurality of nodes: determine geometrical uncorrelated uncertainty for the node based on the sensitivity of the value of the one or more properties at the node and a deviation in the geometrical coordinate of the node

203

Determine uncertainty in the one or more behaviors of the real-world object, wherein the uncertainty in the one or more behaviors of the real-world object is determined using a summed aggregation function of the geometrical uncorrelated uncertainty determined for each node of the subset and an uncertainty characterization parameter

204

Output (i) an indication of the one or more behaviors of the real-world object and (ii) an indication of the determined uncertainty in the one or more behaviors of the real-world object

205

FIG. 2

FIG. 3

FIG. 4A

FIG. 4B

EP 4 726 597 A1

FIG. 5

FIG. 6A

$$611 \quad p=1 \Rightarrow \quad \Delta\alpha_n = \cfrac{1}{\sqrt{\left(\cfrac{df_\mu}{d\alpha_{x,n}}\right)^2 + \left(\cfrac{df_\mu}{d\alpha_{y,n}}\right)^2 + \left(\cfrac{df_\mu}{d\alpha_{z,n}}\right)^2}} \left\{ \begin{array}{c} \cfrac{df_\mu}{d\alpha_{x,n}} \\ \cfrac{df_\mu}{d\alpha_{y,n}} \\ \cfrac{df_\mu}{d\alpha_{z,n}} \end{array} \right\}$$

612

Geometrical perturbation field $\Delta\alpha$ — 610

Uncertainty sensitivities $\dfrac{d\tilde{\sigma}_f}{d\phi}$ — 620

FIG. 6B

$$631 \quad p=2 \Rightarrow \quad \Delta\alpha_n = \left\{ \begin{array}{c} \cfrac{df_\mu}{d\alpha_{x,n}} \\ \cfrac{df_\mu}{d\alpha_{y,n}} \\ \cfrac{df_\mu}{d\alpha_{z,n}} \end{array} \right\}$$

Geometrical perturbation fields are highly localized for larger $p$

— 630

— 640

FIG. 6C

$$651 \quad p=6 \Rightarrow \quad \Delta\alpha_n = \left(\left(\cfrac{df_\mu}{d\alpha_{x,n}}\right)^2 + \left(\cfrac{df_\mu}{d\alpha_{y,n}}\right)^2 + \left(\cfrac{df_\mu}{d\alpha_{z,n}}\right)^2\right)^2 \left\{ \begin{array}{c} \cfrac{df_\mu}{d\alpha_{x,n}} \\ \cfrac{df_\mu}{d\alpha_{y,n}} \\ \cfrac{df_\mu}{d\alpha_{z,n}} \end{array} \right\}$$

— 650

— 660

FIG. 6D

711 — Initial design

701 — **Finite element analysis** of deterministic design

Adjoint sensitivity analysis of deterministic design $\frac{df_\mu}{d\phi}$

710

708 — Design variable update

Optimization converged?

No

709

Yes

712 — Optimized design

700

**Geometrical uncertainty calculations**

Adjoint nodal sensitivity analysis of deterministic design $\frac{df_\mu}{d\alpha}$ — 702

Novel geometrical first-order approximated uncertainty measure $\tilde{\sigma}_f$ — 703

Geometrical perturbation of FE mesh for uncertainty sensitivities $\Delta\alpha$ — 704

**Finite element analysis** of perturbed design for finite difference evaluation — 705

Adjoint sensitivity analysis of perturbed design $\frac{df(\mu_\alpha + \Delta\alpha)}{d\phi}$ — 706

**Robust response function** $f_r$ and corresponding sensitivity using finite differences $\frac{df_r}{d\phi} = \frac{df_\mu}{d\phi} + \frac{d\tilde{\sigma}_f}{d\phi}$ — 707

FIG. 7

FIG. 8D

Overlaying internal meshes showing nodal geometrical differences 850

FIG. 8B

800

Pressure loading 810

Clamped boundary conditions 820

821b

821a

FIG. 8C

Mesh 1 830

Mesh 2 840

FIG. 8A

800

Non-design spaces 802

805

0.1 m

0.1 m

804

Design space

0.2 m

803

801

**Deterministic optimization**

901 — Compliance $f_0$

**Robustness optimization**

902 — $f_r$ using $p = 2$, and $\sigma_\alpha = 1$

$\kappa = 0.01$  903    904 $\kappa = 0.1$

| Objective function | | | | | | |
|---|---|---|---|---|---|---|
| | **Mesh 1** 830 | **Mesh 2** 840 | **Mesh 1** 830 | **Mesh 2** 840 | **Mesh 1** 830 | **Mesh 2** 840 |

Deterministic $f_0$: 3.28·10⁻⁴ Nm / 3.60·10⁻⁴ Nm / 3.33·10⁻⁴ Nm / 3.34·10⁻⁴ Nm / 3.56·10⁻⁴ Nm / 3.56·10⁻⁴ Nm

Uncertainty $\sigma_f$: 1.66·10⁻³ Nm / 2.30·10⁻³ Nm / 1.75·10⁻³ Nm / 1.73·10⁻³ Nm / 1.09·10⁻³ Nm / 1.10·10⁻³ Nm

Robust $f_r(\kappa)$: 3.51·10⁻⁴ Nm / 3.51·10⁻⁴ Nm / 4.65·10⁻⁴ Nm / 4.66·10⁻⁴ Nm

FIG. 9A   FIG. 9B   FIG. 9C   FIG. 9D   FIG. 9E   FIG. 9F

**Deterministic optimization**

Objective function — 1001 ⟶ Compliance $f_0$

**Robustness optimization**

1002 ⟶ $f_r$ using $p = 1$, $\kappa = 0.001$, and $\sigma_\alpha = 1$ — 1003 — 1004 — 1005

Mesh 1 830 — Mesh 2 840 — Mesh 1 830 — Mesh 2 840

Optimized Design

Relative density — Solid 1, 0.8, 0.6, 0.4, 0.2, Void 0

1009 — 1010 — 1020 — 1030 — 1040

| | Mesh 1 (Deterministic) | Mesh 2 (Deterministic) | Mesh 1 (Robustness) | Mesh 2 (Robustness) |
|---|---|---|---|---|
| Deterministic $f_0$ | $3.28 \cdot 10^{-4}$ Nm | $3.60 \cdot 10^{-4}$ Nm | $3.31 \cdot 10^{-4}$ Nm | $3.30 \cdot 10^{-4}$ Nm |
| Uncertainty $\kappa \cdot \hat{\sigma}_f$ | $0.23 \cdot 10^{-4}$ Nm | $0.45 \cdot 10^{-4}$ Nm | $0.22 \cdot 10^{-4}$ Nm | $0.22 \cdot 10^{-4}$ Nm |
| Robust $f_r(\kappa)$ | $3.51 \cdot 10^{-4}$ Nm | $4.05 \cdot 10^{-4}$ Nm | $3.53 \cdot 10^{-4}$ Nm | $3.51 \cdot 10^{-4}$ Nm |

Optimization iteration history

Objective function (0.002, 0.001, 0 — 0, 20, 40, 60 Optimization iteration) — 1011 — 1021 — 1031 — 1041

FIG. 10A     FIG. 10B     FIG. 10C     FIG. 10D

**Deterministic optimization**

Objective function

1101 ⟶ Compliance $f_0$

Robustness optimization

1102 ⟶ $f_r$ using $p = 1$, $\kappa = 0.001$, and $\sigma_\alpha = 1$

1103  1104  1105

| | Mesh 1 830 | Mesh 2 840 | Mesh 1 830 | Mesh 2 840 |
|---|---|---|---|---|

Optimized Design

Relative density

Solid  1

0.8
0.6
1109  0.4
0.2
Void  0

1110  1120  1130  1140

| | | | | |
|---|---|---|---|---|
| Deterministic $f_0$ | **3.51·10⁻⁴ Nm** | **3.50·10⁻⁴ Nm** | 3.31·10⁻⁴ Nm | 3.32·10⁻⁴ Nm |
| Uncertainty $\kappa \cdot \tilde{\sigma}_f$ | 0.39·10⁻⁴ Nm | 0.39·10⁻⁴ Nm | 0.22·10⁻⁴ Nm | 0.22·10⁻⁴ Nm |
| Robust $f_r(\kappa)$ | 3.89·10⁻⁴ Nm | 3.89·10⁻⁴ Nm | **3.53·10⁻⁴ Nm** | **3.54·10⁻⁴ Nm** |

Optimization iteration history

Objective function

0.002
0.001
0

0  10  20  30

Optimization iteration

1111  1121  1131  1141

FIG. 11A    FIG. 11B    FIG. 11C    FIG. 11D

**Deterministic optimization**

**Robustness optimization**

Objective function

1201 Compliance $f_0$

1202 $f_r$ using $p = 1$, $\kappa = 0.001$, and $\sigma_\alpha = 1$

1203 1204 1205

Mesh 1 830    Mesh 2 840    Mesh 1 830    Mesh 2 840

Optimized Design

Thickness
0.0025
0.0002

1209    1210    1220    1230    1240

| | Mesh 1 830 | Mesh 2 840 | Mesh 1 830 | Mesh 2 840 |
|---|---|---|---|---|
| Deterministic $f_0$ | $2.73 \cdot 10^{-5}$ Nm | $2.71 \cdot 10^{-5}$ Nm | $2.63 \cdot 10^{-5}$ Nm | $2.65 \cdot 10^{-5}$ Nm |
| Uncertainty $\kappa \cdot \tilde{\sigma}_f$ | $0.78 \cdot 10^{-5}$ Nm | $0.77 \cdot 10^{-5}$ Nm | $0.52 \cdot 10^{-5}$ Nm | $0.54 \cdot 10^{-5}$ Nm |
| Robust $f_r(\kappa)$ | $3.51 \cdot 10^{-5}$ Nm | $3.48 \cdot 10^{-5}$ Nm | $3.15 \cdot 10^{-5}$ Nm | $3.19 \cdot 10^{-5}$ Nm |

Optimization iteration history

Objective function — Optimization iteration

1211    1221    1231    1241

FIG. 12A    FIG. 12B    FIG. 12C    FIG. 12D

FIG. 13B

FIG. 13A

EP 4 726 597 A1

FIG. 13C

FIG. 13D

**Deterministic optimization**

**Objective function**  1401 Compliance $f_0$

Mesh 1 1330  Mesh 2 1340

1410  1420

**Optimized Design** Isometric cut value: 0.3

| | Mesh 1 1330 | Mesh 2 1340 |
|---|---|---|
| Deterministic $f_0$ | **4.28 Nm** | **4.38 Nm** |
| Uncertainty $\kappa \cdot \tilde{\sigma}_f$ | 1.53 Nm | 1.59 Nm |
| Robust $f_r(\kappa)$ | 5.81 Nm | 5.97 Nm |

**Optimization iteration history**

Objective function — Optimization iteration  1411

Objective function — Optimization iteration  1421

FIG. 14A   FIG. 14B

**Robustness optimization**

1402 $f_r$ using $p = 1$, $\kappa = 0.001$, and $\sigma_\alpha = 1$  1403 1404 1405

1330 Mesh 1   1340 Mesh 2

1430  1440

| | Mesh 1 1330 | Mesh 2 1340 |
|---|---|---|
| | 3.98 Nm | 3.96 Nm |
| | 1.02 Nm | 1.02 Nm |
| | **5.00 Nm** | **4.98 Nm** |

Objective function — Optimization iteration  1431

Objective function — Optimization iteration  1441

FIG. 14C   FIG. 14D

FIG. 15A

FIG. 15B

FIG. 16A    FIG. 16B    FIG. 16C    FIG. 16D

FIG. 17A

FIG. 17B

EP 4 726 597 A1

|  | Deterministic optimization | Robustness optimization 1800 | | | |
|---|---|---|---|---|---|
| **Objective function** 1730 | Compliance $f_0$ | $f_r$ using $p=1$ and $\sigma_\alpha=1$ | | | |
|  | $\kappa=0$ | $\kappa=0.4$ 1801 | $\kappa=1$ 1802 | $\kappa=2$ 1803 | $\kappa=3$ 1804 |
| Move limit 0.10: **Optimized Design** Isometric cut value: 0.3 | 1710 | | | | |
| Deterministic $f_0$ (1810a) | **5.82 Nm** | 5.82 Nm | 5.90 Nm | 5.93 Nm | 5.97 Nm |
| Uncertainty $\tilde\sigma_f$ (1811a) | 3.54 Nm | 2.75 Nm | 2.54 Nm | 2.43 Nm | 2.46 Nm |
| Robust $f_r(\kappa)$ (1812a) | 5.82 Nm | **6.92 Nm** | **8.43 Nm** | **10.79 Nm** | **13.34 Nm** |
| Deterministic $f_0$ using optimized design as initial $\Phi$ (1813a) | 5.82 Nm | 5.82 Nm | 5.83 Nm | 5.83 Nm | 5.80 Nm |
| Move limit 0.25: **Optimized Design** Isometric cut value: 0.3 | 1720 | 1805 | 1806 | 1807 | 1808 |
| Deterministic $f_0$ (1810b) | **5.82 Nm** | 5.73 Nm | 5.67 Nm | 5.73 Nm | 5.88 Nm |
| Uncertainty $\tilde\sigma_f$ (1811b) | 3.78 Nm | 2.85 Nm | 2.58 Nm | 2.44 Nm | 2.43 Nm |
| Robust $f_r(\kappa)$ (1812b) | 5.82 Nm | **6.87 Nm** | **8.25 Nm** | **10.60 Nm** | **13.17 Nm** |
| Deterministic $f_0$ using optimized design as initial $\Phi$ (1813b) | 5.82 Nm | 5.69 Nm | 5.63 Nm | 5.65 Nm | 5.70 Nm |

FIG. 18

**Optimization convergence history of the design variables (relative densities) for $p = 6$, $\kappa = 10$, and $\sigma_\alpha = 1$**

FIG. 19A

**Derivatives of output displacement response with respect to the nodal coordinates**

$$\begin{pmatrix} \dfrac{dDRESP}{d\alpha_{x,n}} \\ \dfrac{dDRESP}{d\alpha_{y,n}} \end{pmatrix}$$

FIG. 19B

EP 4 726 597 A1

FIG. 20A  FIG. 20B  FIG. 20C

**Deterministic**

2101

A so-called hinge in compliant mechanism design 2102

**Concentrated lumped compliant hinge** consisting of intermediate density elements

FIG. 21A

**No filtering of nodal gradients**

2111  $p = 1$  $\kappa = 0.2$

A so-called hinge in compliant mechanism design 2114

2112  $p = 6$  $\kappa = 10$

A so-called hinge in compliant mechanism design 2115

**Filtering of nodal gradients**

2113  $p = 6$  $\kappa = 10$

$R$ ↕●

A so-called hinge in compliant mechanism design 2116

**Towards distributed compliant hinges** using geometrical uncertainties in the optimization formulation

FIG. 21B

**Design space**

2202  
$L = 0.2\,\text{m}$  
2210  
2201  
2203  
2204  
2200  
$L$  
$f$  
2205  
2206  
$\frac{2L}{5}$  
$\frac{2L}{5}$  
$\frac{3L}{5}$

FIG. 22A

**Mesh**

2220

FIG. 22B

**Deterministic optimized Designs**

Objective function  
Subject to

$f_{0-mass}$ — 2231  
2241 — $f_{0-compliance}$  
$f_{1-stress}$ — 2232  
2242 — $f_{1-mass}$

2230  
2209  
2240  
2243

Relative density  
Solid — 1, 0.8, 0.6, 0.4, 0.2  
Void — 0

FIG. 22C

**Deterministic optimization**

2231 — $f_{0-mass}$   2241 — $f_{0-compliance}$

2232 — $f_{1-stress}$   2242 — $f_{1-mass}$

**Objective function** — Subject to

2240

**Optimized Design**

2230

Relative density

Solid — 1, 0.8, 0.6, 0.4, 0.2, 0 — Void

2309

2243

| 2310a | $f_{mises\ stress}$ | $6.00 \cdot 10^8$ Pa | $1.25 \cdot 10^9$ Pa |
| 2310b | $f_{compliance}$ | 7410 Nm | **5198 Nm** |
| 2310c | $f_{r-compliance}$ | 17786 Nm | 48876 Nm |
| 2310d | $f_{r-filtered-compliance}$ | 12433 Nm | 12417 Nm |
| 2310e | $f_{mass}$ | $\mathbf{6.68 \cdot 10^{-6}}$ kg | $6.67 \cdot 10^{-6}$ kg |

**Robustness optimization** $p = 5,\ \kappa = 1,\ \sigma_\alpha = 1$

2331 — $f_{r-compliance}$   $f_{r-filtered-compliance}$ — 2341

2332 — $f_{1-mass}$   $f_{1-mass}$ — 2342

$R\updownarrow$ — 2390

2330   2340

| | | $7.35 \cdot 10^8$ Pa | $6.05 \cdot 10^8$ Pa |
| | | 7162 Nm | 6582 Nm |
| | | **13774 Nm** | 15835 Nm |
| | | 11405 Nm | **10339 Nm** |
| | | $6.67 \cdot 10^{-6}$ kg | $6.67 \cdot 10^{-6}$ kg |

**Optimization iteration history**

Objective function — Optimization iteration

2301

2302

2304

2305

FIG. 23A   FIG. 23B   FIG. 23C   FIG. 23D

Displacement magnitude of the top-left node as response $f = u_{mag}$ for in-plane perturbations of the center node in the x-direction ($\alpha_x$) and y-direction ($\alpha_y$)

2403

Loading $P$

2401

2404

Design variable element $\phi$

2402

$L$

$y$

$x$

Fully clamped

2405a  2405b  2405c

2400

FIG. 24A

2410  2421  2420

2411

$\alpha \sim [-0.01, 0.01] \cdot L$

$\alpha \sim [-0.1, 0.1] \cdot L$

$\frac{df}{d\phi}$

$\frac{df}{d\phi}$

four-node plane stress element (CPS4)

$\alpha_y = -0.01L$

$\alpha_x = 0.01L$  $\alpha_y = -0.1L$

$\alpha_x = 0.1L$

2412

$\alpha_y = 0.01L$  $\alpha_x = -0.01L$

2415  2422

$\alpha_y = 0.1L$  $\alpha_x = -0.1L$

2425

2413  2414

2423  2424

FIG. 24B

2431  2441  2430  2440

$\frac{df}{d\phi}$

$\frac{df}{d\phi}$

four-node shell element (S4)

$\alpha_y = -0.01L$

$\alpha_x = 0.01L$  $\alpha_y = -0.1L$

$\alpha_z = 0.1L$

2432

$\alpha_y = 0.01L$  $\alpha_x = -0.01L$

2435  2442

$\alpha_y = 0.1L$  $\alpha_x = -0.1L$

2445

2433  2434

2443  2444

FIG. 24C

EP 4 726 597 A1

56

FIG. 25

50, 60

86 NETWORK INTERFACE

SYSTEM BUS 79

95 DISK STORAGE — 92b OS PROGRAM — DATA 94b

84 CENTRAL PROCESSOR UNIT

90 MEMORY — 92a ROUTINE — DATA 94a

82 I/O DEVICES INTERFACE

FIG. 26

| | Europäisches Patentamt<br>European Patent Office<br>Office européen des brevets | **EUROPEAN SEARCH REPORT** | **Application Number**<br>EP 25 20 7461 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DONG WANG ET AL: "Robust topology optimization under multiple independent uncertainties of loading positions", INTERNATIONAL JOURNAL OF NUMERICAL METHODS IN ENGINEERING, CHICHESTER, GB, vol. 121, no. 22, 27 August 2020 (2020-08-27), pages 4944-4970, XP071325393, ISSN: 0029-5981, DOI: 10.1002/NME.6503<br>* abstract *<br>* page 4945, paragraph 2 *<br>* page 4946, paragraph 2 *<br>* page 4947, paragraph 3 - page 4948, paragraph 4 *<br>* page 4949, paragraph 2 *<br>* page 4950, paragraph 4-6 *<br>* page 4951, paragraph 2-4 *<br>* page 4952, paragraph 5 - page 4953, paragraph 3 *<br>* figures 1-2,5-7; table 1 *<br>-----<br>-/-- | 1-15 | INV.<br>G06F30/23<br>G06F30/17<br><br>ADD.<br>G06F30/15 |
| | | | TECHNICAL FIELDS SEARCHED (IPC)<br><br>G06F |

The present search report has been drawn up for all claims

| Place of search | Date of completion of the search | Examiner |
|---|---|---|
| Munich | 18 February 2026 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

| | Europäisches Patentamt / European Patent Office / Office européen des brevets | | **Application Number** |
|---|---|---|---|
| | | | EP 25 20 7461 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SATO YUKI ET AL: "Reliability-based topology optimization under shape uncertainty modeled in Eulerian description", STRUCTURAL AND MULTIDISCIPLINARY OPTIMIZATION, SPRINGER BERLIN HEIDELBERG, BERLIN/HEIDELBERG, vol. 59, no. 1, 6 September 2018 (2018-09-06), pages 75-91, XP036664591, ISSN: 1615-147X, DOI: 10.1007/S00158-018-2051-Y [retrieved on 2018-09-06] * abstract * * page 78, column 2, paragraph 2 - page 79, column 1, paragraph 2 * * page 89, column 2, paragraph 2 * * figures 2, 10, 17 * | 1-15 | |
| A | MAZDAK TOOTKABONI ET AL: "Topology optimization of continuum structures under uncertainty A Polynomial Chaos approach", COMPUTER METHODS IN APPLIED MECHANICS AND ENGINEERING, NORTH-HOLLAND, AMSTERDAM, NL, vol. 201, 19 September 2011 (2011-09-19), pages 263-275, XP028124194, ISSN: 0045-7825, DOI: 10.1016/J.CMA.2011.09.009 [retrieved on 2011-09-22] * abstract * * page 266, column 2, paragraph 3-4 * * page 267, column 1, paragraph 3 - column 2, paragraph 1 * * figures 2,5 * | 1-15 | **TECHNICAL FIELDS SEARCHED (IPC)** |

The present search report has been drawn up for all claims

| Place of search | Date of completion of the search | Examiner |
|---|---|---|
| Munich | 18 February 2026 | Sohrt, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **O. SIGMUND** ; **J. PETERSSON**. Numerical instabilities in topology optimization: A survey on procedures dealing with checkerboards, mesh-dependencies and local minima. *Structural optimization*, 1998, vol. 16 (1), 68-75, https://doi.org/10.1007/BF01214002
- **I. P. A. PAPADOPOULOS** ; **P. E. FARRELL** ; **T. M. SUROWIEC**. Computing Multiple Solutions of Topology Optimization Problems. *SIAM Journal on Scientific Computing*, 2021, vol. 43 (3), A1555-A1582, https://epubs.siam.org/doi/10.1137/20M1326209
- **C. TALISCHI** ; **G. H. PAULINO** ; **A. PEREIRA** ; **I. F. M. MENEZES**. Polygonal finite elements for topology optimization: A unifying paradigm. *International Journal for Numerical Methods in Engineering*, 2010, vol. 82 (6), 671-698, https://onlinelibrary.wiley.com/doi/10.1002/nme.2763
- **P. ANTONIETTI** ; **M. BRUGGI** ; **S. SCACCHI** ; **M. VERANI**. On the virtual element method for topology optimization on polygonal meshes: A numerical study. *Computers & Mathematics with Applications*, 2017, vol. 74 (5), 1091-1109, https://linkinghub.elsevier.com/retrieve/pii/S0898122117303309
- **O. SIGMUND** ; **K. MAUTE**. Topology optimization approaches: A comparative review. *Structural and Multidisciplinary Optimization*, 2013, vol. 48 (6), 1031-1055, http://link.springer.com/article/10.1007/s00158-013-0978-6
- **B. S. LAZAROV** ; **F. WANG** ; **O. SIGMUND**. Length scale and manufacturability in density-based topology optimization. *Archive of Applied Mechanics*, 2016, vol. 86 (1), 189-218, https://doi.org/10.1007/s00419-015-1106-4
- **O. SIGMUND**. Morphology-based black and white filters for topology optimization. *Structural and Multidisciplinary Optimization*, 2007, vol. 33 (4-5), 401-424, https://link.springer.com/article/10.1007/s00158-006-0087-x
- On the Design of Compliant Mechanisms Using Topology Optimization. **O. SIGMUND**. Mechanics of Structures and Machines. Taylor & Francis, 1997, vol. 25, 493-524
- **A. D. KIUREGHIAN** ; **O. DITLEVSEN**. Aleatory or epistemic? Does it matter?. *Structural Safety*, 2009, vol. 31 (2), 105-112, https://www.sciencedirect.com/science/article/pii/S0167473008000556

- **K. STELTNER** ; **B. KRIEGESMANN** ; **C. B. W. PEDERSEN**. Robust sizing optimization of stiffened panels subject to geometric imperfections using fully nonlinear post buckling analyses. *Thin-Walled Structures*, 2022, vol. 175, 109195, https://www.sciencedirect.com/science/article/pii/S0263823122001719
- **A. HALDAR** ; **S. MAHADEVAN**. Probability, Reliability and Statistical Methods in Engineering Design. John Wiley & Sons, 1999
- **M. SCHEVENELS** ; **B. S. LAZAROV** ; **O. SIGMUND**. Robust topology optimization accounting for spatially varying manufacturing errors. *Computer Methods in Applied Mechanics and Engineering*, 2011, vol. 200 (49-52), 3613-3627, http://www.sciencedirect.com/science/article/pii/S0045782511002611
- **B. SUDRET** ; **S. MARELLI** ; **J. WIART**. Surrogate models for uncertainty quantification: An overview. *2017 11th European Conference on Antennas and Propagation (EUCAP)*, 2017, 793-797
- **I. DOLTSINIS** ; **Z. KANG**. Robust design of structures using optimization methods. *Computer Methods in Applied Mechanics and Engineering*, 2004, vol. 193 (23), 2221-2237, http://www.sciencedirect.com/science/article/pii/S0045782504000787
- **I. DOLTSINIS** ; **Z. KANG** ; **G. CHENG**. Robust design of non-linear structures using optimization methods. *Computer Methods in Applied Mechanics and Engineering*, 2005, vol. 194 (12), 1779-1795, http://www.sciencedirect.com/science/article/pii/S0045782504004165
- **B. S. LAZAROV** ; **M. SCHEVENELS** ; **O. SIGMUND**. Topology optimization with geometric uncertainties by perturbation techniques. *International Journal for Numerical Methods in Engineering*, 2012, vol. 90 (11), 1321-1336
- **M. KRANZ** ; **J. K. L"UDEKER** ; **B. KRIEGESMANN**. A generalized approach for robust topology optimization using the first-order second-moment method for arbitrary response functions. *Structural and Multidisciplinary Optimization*, 2023, vol. 66 (5), 98, https://doi.org/10.1007/s00158-023-03540-w
- **M. JANSEN** ; **G. LOMBAERT** ; **M. SCHEVENELS**. Robust topology optimization of structures with imperfect geometry based on geometric nonlinear analysis. *Computer Methods in Applied Mechanics and Engineering*, 2015, vol. 285, 452-467, http://www.sciencedirect.com/science/article/pii/S004578251400454X

- Efficient Robust Topology Optimization of Eigenfrequencies Using the First- Order Second-Moment Method. **J. C. KR"UGER** ; **B. KRIEGESMANN**. Optimal Design and Control of Multi-body Systems, IUTAM Bookseries. Springer Nature, 2024, 75-84
- **K. STELTNER** ; **C. B. W. PEDERSEN** ; **B. KRIEGESMANN**. Semi-intrusive approach for stiffness and strength topology optimization under uncertainty. *Optimization and Engineering*, September 2022, https://doi.org/10.1007/s11081-022-09770-z
- **J. C. KRÜUGER** ; **M. KRANZ** ; **T. SCHMIDT** ; **R. SEIFRIED** ; **B. KRIEGESMANN**. An efficient and non-intrusive approach for robust design optimization with the first-order second-moment method. *Computer Methods in Applied Mechanics and Engineering*, 2023, vol. 414, 116136, https://linkinghub.elsevier.com/retrieve/pii/S0045782523002608
- **I. BEN-YELUN** ; **A. O. YUKSEL** ; **F. CIRAK**. Robust topology optimization of lattice structures with spatially correlated uncertainties. *Structural and Multidisciplinary Optimization*, 2024, vol. 67 (2), 16, https://link.springer.com/10.1007/s00158-023-03716-4
- **M. JANSEN** ; **G. LOMBAERT** ; **M. DIEHL** ; **B. S. LAZAROV** ; **O. SIGMUND** ; **M. SCHEVENELS**. Robust topology optimization accounting for misplacement of material. *Structural and Multidisciplinary Optimization*, 2013, vol. 47 (3), 317-333, https://doi.org/10.1007/s00158-012-0835-z
- **J. K. GUEST** ; **T. IGUSA**. Structural optimization under uncertain loads and nodal locations. *Computer Methods in Applied Mechanics and Engineering*, 2008, vol. 198 (1), 116-124, http://www.sciencedirect.com/science/article/pii/S004578250800159X
- Stochastic finite element methods and reliability: a state-of-the-art report. **B. SUDRET** ; **A. DER KIUREGHIAN**. Tech. Rep. UCB/SEMM-2000/08. Department of Civil and Environmental Engineering, 2000

- **M. P. BENDSØE**. Optimal shape design as a material distribution problem. *Structural optimization*, 1989, vol. 1 (4), 193-202, https://link.springer.com/article/10.1007/BF01650949
- **O. SIGMUND** ; **K. MAUTE**. Sensitivity filtering from a continuum mechanics perspective. *Structural and Multidisciplinary Optimization*, 2012, vol. 46 (4), 471-475, https://doi.org/10.1007/s00158-012-0814-4
- **K. SVANBERG** ; **H. SV"ARD**. Density filters for topology optimization based on the Pythagorean means. *Structural and Multidisciplinary Optimization*, 2013, vol. 48 (5), 859-875, http://link.springer.com/10.1007/s00158-013-0938-1
- **K. SVANBERG**. The method of moving asymptotes - a new method for structural optimization. *International Journal for Numerical Methods in Engineering*, 1987, vol. 24 (2), 359-373, http://onlinelibrary.wiley.com/doi/10.1002/nme. 1620240207 /abstract
- **B. KRIEGESMANN** ; **J. K. L"UDEKER**. Robust compliance topology optimization using the first-order second- moment method. *Structural and Multidisciplinary Optimization*, 2019, vol. 60 (1), 269-286, https://doi.org/10.1007/s00158-019-02216-8
- **SIMULIA, ABAQUS**. *Dassault Systemes*, 2024
- **Y. KANNO**. On three concepts in robust design optimization: absolute robustness, relative robustness, and less variance. *Structural and Multidisciplinary Optimization*, 2020, vol. 62 (2), 979-1000, https://doi.org/10.1007/s00158-020-02503-9
- **SIMULIA, TOSCA**. *Structure, Dassault Systemes*, 2024
- **D. A. TORTORELLI** ; **P. MICHALERIS**. Design sensitivity analysis: Overview and review. *Inverse Problems in Engineering*, 1994, vol. 1 (1), 71-105, https://www.tandfonline.com/doi/-full/10.1080/174159794088027573